# EUROPÄISCHE PATENTSCHRIFT

(11) **EP 2 321 545 B1**
(45) Veröffentlichungstag und Bekanntmachung des Hinweises auf die Patenterteilung: **01.10.2014**
(21) Anmeldenummer: 09775585.4
(22) Anmeldetag: 04.08.2009
(51) Int. Cl.: F16D 23/02

(54) **GETRIEBE-SYNCHRONISATIONSVORRICHTUNG**
TRANSMISSION SYNCHRONIZATION DEVICE
DISPOSITIF DE SYNCHRONISATION D'UNE TRANSMISSION

(30) Priorität: 06.08.2008 AT 12172008
(43) Veröffentlichungstag der Anmeldung: 18.05.2011
(73) Patentinhaber: Miba Sinter Austria GmbH, 4663 Laakirchen (AT); hofer forschungs- und entwicklungs GmbH, 4451 Garsten (AT)
(72) Erfinder: HACKL, Thomas, 4642 Sattledt (AT); HOFER, Johann, Paul, 97528 Michelau (DE); HOFER, Markus, 4451 Garsten (AT); MÜLLER, Alexander, 4813 Altmünster (AT); PAMMINGER, Helmut, 4840 Vöcklabruck (AT)
(74) Vertreter: Burger, Hannes
(86) Internationale Anmeldenummer: PCT/AT2009/000300
(87) Internationale Veröffentlichungsnummer: WO 2010/015011

(56) Entgegenhaltungen:
- EP-A2- 1 750 025
- EP-A2- 1 826 431
- EP-A2- 1 900 956
- WO-A1-03/004892
- WO-A2-2009/076691
- US-A- 5 664 654

## Beschreibung

### Kraftverstärkungselement

Die Erfindung betrifft eine Getriebe-Synchronisationsvorrichtung mit zumindest einer auf einer Welle anordenbaren Synchronnabe, die eine innere Steckverzahnung zur drehfesten Verbindung mit der Welle und eine äußere Muffenverzahnung aufweist, an der in axialer Richtung gegenüberliegend zumindest ein Synchronring angeordnet ist, zumindest einem, auf der Welle anordenbaren Gangzahnrad, zumindest einem Reibpaket, das unterhalb des Synchronringes und mit diesem in Wirkverbindung stehend angeordnet ist, sowie mit zumindest einer, über der Synchronnabe angeordneten Schiebemuffe, wobei zwischen dem Gangzahnrad und dem Synchronring ein Kupplungskörper angeordnet ist und wobei die Synchronnabe zumindest eine Ausnehmungen aufweist, in der zumindest ein federbelastetes Kraftverstärkungselement angeordnet ist, das einen Grundkörper, der eine Höhe und - in Draufsicht betrachtet - eine Längserstreckung und eine Breitenerstreckung aufweist, wobei die Längserstreckung in Umfangsrichtung der Synchronnabe und die Breitenerstreckung in Richtung der Breite der Synchronnabe in axialer Richtung ausgebildet bzw. angeordnet sind, und der in Richtung der Längserstreckung zwei einander gegenüberliegende, distale Endbereiche aufweist, wobei in zumindest einem Endbereich, bevorzugt in beiden, eine Funktionsfläche ausgebildet ist, die mit der Synchronnabe zusammenwirkt(en), und die im bzw. in den distalen Endbereich(en) in einem spitzen Winkel zur größten Längserstreckung des Grundkörpers und gegen die Längserstreckung geneigt orientiert ist bzw. sind, vorzugsweise in entgegengesetzter Richtung, insbesondere gegengleich, wobei am Grundkörper zwischen den beiden distalen Endbereichen eine Mittenerhöhung für den Eingriff in eine Schiebemuffennut an einer Unterseite der Schiebemuffe ausgebildet ist, wobei die Mittenerhöhung zumindest eine weitere Funktionsfläche aufweist, die mit der Schiebemuffe in Wirkverbindung bringbar ist.

In aktuellen, europäischen Großseriengetrieben werden vor allem Synchronisierungen vom Borg Warner Typ eingesetzt. Derartige Getriebe umfassen üblicherweise pro zu schaltenden Gang ein Losrad, einen Kupplungskörper mit Schaltverzahnung und Reibkonus und einen Synchronring mit Gegenkonus und Sperrverzahnung und weiter eine Synchronnabe mit Steckverzahnung und Muffenverzahnung. In dieser Synchronnabe sind federbelastete Druckstücke angeordnet. Mit Hilfe einer Schiebemuffe mit Schaltverzahnung und Innenverzahnung wird zur Vorsynchronisation diese durch die Schaltkraft mitsamt der federbelasteten Druckstücke in die Richtung des zu schaltenden Gangrades verschoben, sodass die Konusflächen von Synchronring und Synchronkonus durch die Druckstücke aufeinander gepresst werden. Der Synchronring wird in der Synchronnabe durch das Reibmoment im Rahmen des tangentialen Spiels verdreht, sodass die Verzahnung von Ring- und Schiebemuffe um eine halbe Verzahnungsbreite gegeneinander verschoben sind. Ist nun die Schaltkraft größer als die Vorsynchronisationskraft, die abhängig von der Vorspannung der Druckfedern der Druckstücke ist, bewegt sich die Schiebemuffe weiter bis die Sperrverzahnung am Synchronring und die Verzahnung der Schiebemuffe aufeinander treffen. Solange das Sperrmoment, resultierend aus der Reibung zwischen den Konusflächen und der Reibung an der Sperrverzahnung, größer ist als das sich aufgrund der Dachschrägenwinkel an der Verzahnung einstellende Rückstellmoment, findet keine weitere axiale Verschiebung der Schiebemuffe statt. Die motorseitigen Getriebeelemente werden durch das Reibmoment beschleunigt bzw. verzögert und es findet damit die Hauptsynchronisation statt. Bei Gleichlauf von Synchronring und Synchronkonus wird das Sperrmoment annähernd Null, sodass die Sperrverzahnung am Synchronring eine Verdrehung des Synchronringes bewirkt, bis sich jeweils Zahn und Zahnlücke gegenüberstehen. Die Verzahnung der Schiebemuffe rutscht durch die Sperrverzahnung des Synchronringes. In der Folge gleitet die Verzahnung der Schiebemuffe mit den Dachschrägen auf der Kupplungsverzahnung am Synchronkonus ab und verdreht den Kupplungskörper mitsamt Losrad bis Zahn und Zahnlücke gegenüberstehen und die formschlüssige Verbindung zwischen Antriebswelle und Losrad hergestellt werden kann.

Zur Verringerung der aufzuwendenden Schaltkraft wurden im Stand der Technik bereits einige Abwandlungen dieses Borg Warner Systems beschrieben.

So ist es aus der DE 696 17 821 T2 bekannt, zwischen der Synchronnabe und einem Synchronisierring einen Verstärkungsmechanismus anzuordnen, der derart positioniert ist, dass er eine Druckkraft aufnimmt, die durch die Bewegung der Schiebemuffe zu dem entsprechenden Geschwindigkeitswechsel-Zahnrad hervorgerufen wird, und dadurch die Druckkraft auf den Synchronring verstärkt und überträgt. Der Verstärkungsmechanismus besteht aus einem Paar von Hebeln, die auf zumindest zwei Abschnitte in einer Umfangsrichtung aufgeteilt sind und eine Vielzahl von Hebelköpfen umfassen. Die Hebelköpfe weisen eine abgeschrägte Kante auf, die eine Angriffsposition für die Aufnahme der axialen Druckkraft, welche durch Aufnahme eines direkten Kontakts in Verbindung mit der Bewegung der Schiebemuffe hervorgerufen wird, und für die Zerlegung der betreffenden Druckkraft in eine radiale Komponentenkraft, die zur einer Mitte hin gerichtet ist, und in eine axiale Komponentenkraft bildet. Die axiale Komponentenkraft wird hervorgerufen, wenn eine an der inneren Umfangs-Keilverzahnung der Schiebemuffe vorgesehene, abgeschrägte Kante gegen die abgeschrägte Kante des Hebelkopfes gedrückt wird.

Die Möglichkeit zur Kraftverstärkung über schräge Flächen ist prinzipiell im Stand der Technik dokumentiert. So beschreibt z. B. die DE 22 43 522 A eine Möglichkeit zur Kraftverstärkung, indem am Synchronring eine noppenartige Einrichtung mit zwei schrägen Flächen vorgesehen ist, die mit einer Gegennoppeneinrichtung der Nabe zusammenwirkt. Bei dieser Ausführung wirkt allerdings die gerade Stirnfläche gegen ein rechteckiges Druckstück.

Die EP 1 750 025 A2 beschreibt zur Kraftverstärkung eine weitere Abwandlung der Druckstücke. Diese sind dabei - in Draufsicht gesehen - H-förmig ausgebildet. Die Endbereiche dieser H-förmigen Druckstücke sind mit einer Querschnittserweiterung versehen, wobei die Übergänge zwischen dem Hauptteil der Druckstücke auf die Endbereiche mit schrägen Flächen versehen sind, die in Richtung auf den Mittelpunkt geneigt ausgebildet sind. Die Synchronnabe weist dazu in den für die Aufnahme der Druckstücke vorgesehenen Ausnehmungen zu diesen schrägen Flächen des Druckstückes komplementäre Abschrägungen auf.

Aus der EP 1 900 956 A ist ein Servo-Synchronisationsdruckstück in I-Form für die Getriebesynchronisation von Losrädern über Schaltmuffen, insbesondere für Zahnradwechselgetriebe wie Handschaltgetriebe von Kraftfahrzeugen, bekannt, das kippbeweglich angeordnete Finger, vorzugsweise mit einem oder mehreren abgeschrägten Eckbereichen, aufweist. Die Schiebemuffe der Synchronisationseinheit ist mit einer radialen Nut, die einen Kegelwinkel aufweist, versehen, in die ein Ende einer Mittenerhöhung des Druckstücks, insbesondere ein Ende eines Lagerstifts, in der Phase vom Sperren bis zum Entsperren durch das Druckstück zum Drehzahlangleich zwischen einem Kupplungskörper und einer Schiebemuffe eingreift. Auch bei dieser Ausführung sind die Servofunktionsflächen negativ, d. h. nach innen auf den Mittelpunkt des Druckstückes geneigt ausgebildet.

Die am 25. Juni 2009 veröffentliche Schrift WO2009/076691 zeigt eine Getriebe-Synchronisationsvorrichtung nach Anspruch 1, mit dem Unterschied, dass die Mittelerhöhung als Kugel am Grundkörper angebracht ist. Die Schrift WO03/004892 offenbart eine Getreiebe-Synchronisationsvorrichtung nach dem Oberbegriff von Anspruch 1.

Die Aufgabe der vorliegenden Erfindung besteht in der Schaffung eines Kraftverstärkungselementes für eine Getriebe-Synchronisationsvorrichtung bzw. in der Schaffung einer Getriebe-Synchronisationsvorrichtung sowie der Vereinfachung eines Synchronringes einer Getriebe-Synchronisationsvorrichtung.

Diese Aufgabe der Erfindung wird mit dem eingangs genannten Kraftverstärkungselement gelöst, bei dem die Funktionsfläche(n) im bzw. in den distalen Endbereich(en) in einem spitzen Winkel zur größten Längserstreckung des Grundkörpers und gegen die Längserstreckung geneigt orientiert ist bzw. sind, vorzugsweise die Funktionsflächen in entgegengesetzter Richtung, d. h. aufeinander zu geneigt sind, insbesondere gegengleich, sowie durch die Ausbildung einer Getriebe-Synchronisationsvorrichtung mit diesem Kraftverstärkungselement, wobei die Längserstreckung des Kraftverstärkungselementes in Umfangsrichtung der Synchronnabe und dessen Breitenerstreckung in Richtung der Breite der Synchronnabe in axialer Richtung ausgerichtet sind, und durch einen sperrverzahnungsfreien Synchronring, bei dem der Synchronringkörper zumindest eine Ausnehmung für die teilweise Aufnahme eines Kraftverstärkungselementes aufweist, und bei dem ein innerer Umfang nur durch die zumindest eine Ausnehmung unterbrochen ist, oder bei dem der Synchronringkörper zumindest ein in axialer Richtung über diesen vorspringendes Mitnehmerelement aufweist und frei von radial nach unten weisenden Vorsprüngen ist, wobei seitliche Wandungen der Ausnehmung oder des zumindest einen Mitnehmerelementes zumindest teilweise abgeschrägte Funktionsflächen für die Anlage an das Kraftverstärkungselement aufweisen.

Im Sinne der vorliegenden Erfindung wird von der Draufsicht auf ein erfindungsgemäßes Druckstück gesprochen, wenn auf eine Seite des Druckstücks geblickt wird, in dessen Endbereichen die Servoschrägen angeordnet sind. In einem Betrachtungswinkel steht bei einer Draufsicht der für einen Schiebemuffeneingriff bezeichnete bzw. bestimmte Abschnitt dem Betrachter entgegen. Der Betrachter befindet sich bei einer Draufsicht schwebend über dem Druckstück in einer Position, bei der der Schiebemuffeneingriff ihm entgegenweist.

Neben den bekannten Vorteilen derartiger, verstärkender Kraftverstärkungselemente, wie z.B. den verbesserten Schaltkomfort im Vergleich zu Borg-Warner Synchronisierungen, hat das erfindungsgemäße Kraftverstärkungselement den Vorteil, dass durch einen Verschleiß im Reibpaket der Getriebe-Synchronisationseinrichtung die Kraftverstärkung nicht bzw. nicht wesentlich beeinflusst wird, wie es z.B. bei dem voranstehend genannten H-förmigen Kraftverstärkungselement der Fall ist. Durch diesen Verschleiß des Reibpaketes wird bei Getriebe Synchronisierungen nach dem Stand der Technik die Verdrehung größer, sodass sich die relative Stellung der Sperrverzahnung des Synchronringes zur Schiebemuffe ändert. Mit dem erfindungsgemäßen Kraftverstärkungselement kann zudem mehr Leistung bei zumindest gleich bleibendem Schaltkomfort übertragen werden. Es sind damit auch schnellere Synchronisationszyklen möglich. Zudem ist durch die mögliche Reduzierung von einer Dreifachkonusausführung der Synchronisation auf eine Zweifachkonusausführung oder eine Einfachkonusausführung eine Reduzierung der Bauraumgröße möglich oder bei gleicher Bauraumgröße wie im Stand der Technik die Übertragung einer höheren Leistung. Das Kraftverstärkungselement kann als Sinterbauteil gefertigt werden, sodass die Herstellkosten gesenkt werden können, bzw. auch Kraftverstärkungselemente wirtschaftlicher hergestellt werden können, die eine komplexere Geometrie aufweisen. Hierbei erweist sich die Ausbildungsmöglichkeit mit einer größeren Fläche - insbesondere im Vergleich zum H-Stück aus dem Stand der Technik - als Vorteil, da damit die Belastung und dadurch der Verschleiß des Kraftverstärkungselementes geringer gehalten werden kann, sodass gegebenenfalls auf zusätzliche festigkeitssteigernde Maßnahmen, wie z. B. die Wärmebehandlung oder das Härten, verzichtet werden kann, wodurch wiederum die Herstellung des Kraftverstärkungselementes einfacher wird. Zudem wird durch die Ausbildung der Mittenerhöhung mit den weiteren Funktionsflächen erreicht, dass der Synchronring sperrverzahnungsfrei ausgebildet und somit dieser hinsichtlich seiner Geometrie vereinfacht werden kann, wodurch dieser kostengünstiger hergestellt werden kann. Durch die Einfachheit des Kraftverstärkungselementes kann dieses kompakt ausgeführt sein, wodurch dessen Anordnung in der Synchronnabe ermöglicht wird und somit die Bauhöhe der Getriebe-Synchronisationsvorrichtung verringert werden kann. Im Vergleich zum Stand der Technik erstreckt sich das Kraftverstärkungselement nicht mehr über zumindest annähernd die gesamte Breite der Schiebemuffe in axialer Richtung, sondern erfolgt beim erfindungsgemäßen Kraftverstärkungselement eine Aufteilung in zumindest ein vorderes und zumindest ein hinteres Kraftverstärkungselement - bezogen auf die Schiebemuffe in axialer Richtung betrachtet - wodurch eine einfachere Geometrie ohne Querschnittsverminderungen durch negativ eingeformten Funktionsflächen, wie dies der Stand der Technik zeigt, möglich wird. Es ist damit eine konstruktiv einfache und ggfs. im Vergleich zum Stand der Technik kompaktere Ausbildung des Kraftverstärkungselementes möglich, insbesondere ist auch ein Kraftverstärkungselement möglich, das nur in einem distalen Endbereich eine Funktionsfläche, eine sog. Servosynchronisationsschräge, möglich, insbesondere für die Rückschaltfunktion, wenngleich die Ausbildung mit zwei derartigen Funktionsflächen für die Rückschalt- und die Hochschaltfunktion bevorzugt wird. Es ist damit auch möglich, dass das Kraftverstärkungselement nur mehr bis in etwa die Hälfte der Breite der Synchronnabe in axialer Richtung in diese hineinragt, wodurch der Platzbedarf der Getriebesynchronisation einerseits verringert werden kann, und andererseits auch die Kraftverteilung positiv beeinflusst werden kann.

Zur Erhöhung des Reibmomentes des einen inneren und äußeren Konusring umfassenden Reibpaketes der Getriebe-Synchronisationsvorrichtung bzw. auch zur Erhöhung der Axialkraft, d. h. der Anpresskraft, ist es von Vorteil, wenn die Funktionsfläche(n) in den distalen Endbereichen in einem spitzen Winkel zur größten Längserstreckung mit einem Absolutwert ausgewählt aus einem Bereich mit einer unteren Grenze von 3 ° und einer oberen Grenze von 89° gegen die Längserstreckung des Grundkörpers geneigt sind.

Diese Funktionsflächen können auch in einem Winkel mit einem Absolutwert ausgewählt aus einem Bereich mit einer unteren Grenze von 15° und einer oberen Grenze von 70° bzw. mit einer unteren Grenze von 45° und einer oberen Grenze von 60° gegen die Längserstreckung des Grundkörpers geneigt sein.

Bezüglich der Winkel sei angemerkt, dass, nachdem im Prinzip nur eine Funktionsfläche für eine Schaltrichtung, insbesondere die Rückschaltfunktion, erforderlich ist, die Winkel der beiden Funktionsflächen auch unterschiedlich sein können, d. h. es sind auch asymmetrische Ausführungen des Kraftverstärkungselementes möglich.

Die Flächenpressung der Verstärkung kann weiters dadurch verbessert werden, dass die Funktionsfläche(n), insbesondere jene in den distalen Endbereich(en), jeweils eine Größe aufweisen, die ausgewählt ist aus einem Bereich mit einer unteren Grenze von 5 mm² und einer oberen Grenze von 60 mm². Zudem ist damit die Druckverteilung positiv beeinflussbar.

Die Funktionsfläche(n) kann bzw. können auch eine Größe aufweisen, die ausgewählt ist aus einem Bereich mit einer unteren Grenze von 20 mm² und einer oberen Grenze von 50 mm², bzw. die ausgewählt ist aus einem Bereich mit einer unteren Grenze von 35 mm² und einer oberen Grenze von 40 mm².

Es ist weiters möglich, dass ein Querschnitt des Grundkörpers in Richtung der Höhe zumindest annähernd u-förmig ausgebildet ist, wodurch die Einpassung des Kraftverstärkungselementes in die Nabe vereinfacht ist.

Zur Erhöhung der Funktionssicherheit des Schaltvorganges ist es von Vorteil, wenn jeweils zumindest eine der Kanten der Funktionsfläche(n) in dem bzw. den distalen Endbereich(en) in Richtung der Höhe gebrochen ist bzw. sind, da damit der Eingriff der komplementären Funktionsfläche der Synchronnabe einfacher erfolgen kann. Zudem ist damit eine einfachere Fertigung des Kraftverstärkungselementes möglich.

Erfindungsgemäss ist die zumindest eine weitere Funktionsfläche der Mittenerhöhung in Richtung der Breitenerstreckung geneigt bzw. weist nach einer bevorzugten Ausführungsvariante die Mittenerhöhung in Richtung der Längserstreckung betrachtet einen zumindest annähernd trapezförmigen Querschnitt auf, mit zwei gegengleich geneigten weiteren Funktionsflächen. Es wird damit die Radialbewegung des Kraftverstärkungselementes erleichtert, da diese geneigte(n) Fläche(n) auf einer bzw. zwei dazu komplementären Fläche(n) der Schiebemuffennut abgleiten kann bzw. können. Insbesondere ist damit auch das Überdrücken - und somit Entsperren - des Kraftverstärkungselementes in Richtung auf die Synchronnabe durch die Schiebemuffe, wenn das anliegende Moment Null ist, einfacher, wodurch die erforderliche Entsperrkraft reduziert werden kann. Andererseits ist damit auch eine verbesserte Sperrwirkung des Kraftverstärkungselementes für die Schiebemuffe erreichbar.

Im Bereich der Kanten der spitzen Winkel kann bzw. können in dem bzw. den distalen Endbereich(en) eine zusätzliche Funktionsfläche am Kraftverstärkungselement ausgebildet sein, die in Wirkverbindung mit dem Synchronring bringbar ist. Dazu kann der Synchronring zumindest eine Ausnehmung aufweist, in die das Kraftverstärkungselement eingreift bzw. in der es zumindest teilweise aufgenommen ist. Diese Ausnehmung im Synchronring kann dabei in Umfangsrichtung größer sein als die Längserstreckung des Kraftverstärkungselementes in dieser Richtung. Es wird damit eine Sperrfläche für den Synchronring zur Verfügung gestellt, sodass auf eine zusätzliche Sperrverzahnung, wie sie aus dem Stand der Technik für diesen Zweck bekannt ist, verzichtet werden kann, wodurch die Geometrie des Synchronringes einfacher wird und dieser preisgünstiger hergestellt werden kann.

Eine verbesserte Sperr- und Entsperrwirkung bei reduzierter Entsperrkraft wird erreicht, wenn die zusätzliche(n) Funktionsfläche(n) gegen eine durch die Längserstreckung und die Breitenerstreckung definierte Querschnittsebene derart geneigt ausgebildet sind, dass die Länge des Grundkörpers in Richtung auf die Mittenerhöhung größer wird.

Zur besseren Abstützung des Kraftverstärkungselementes in der Synchronnabe kann vorgesehen sein, dass zwischen zumindest einem der distalen Endbereiche und der Mittenerhöhung, vorzugsweise beidseitig, auf der Oberseite des Grundkörpers höckerartige Erhebungen angeordnet sind.

Ebenfalls zur Vereinfachung des Synchronringes kann vorgesehen sein, dass im Grundkörper eine Ausnehmung für den Eingriff des Synchronringes angeordnet ist, wozu der Synchronring zumindest einen in axialer Richtung vorragenden Vorsprung aufweisen kann, der in die Ausnehmung des Kraftverstärkungselementes eingreift. Wiederum kann damit auf die voranstehend erwähnte Sperrverzahnung am Synchronring verzichtet werden.

Bevorzugt ist dabei eine die Ausnehmung begrenzende Wandung des Grundkörpers zumindest teilweise abgeschrägt und ist in einer weiteren bevorzugten Ausführungsvariante der Vorsprung des Synchronringes mit zumindest einer Schräge versehen, die eine zur abgeschrägten, die Ausnehmung im Grundkörper begrenzenden Wandung komplementäre Neigung aufweist. Auch diese Maßnahmen dienen dazu, um eine verbesserte Sperr- und Entsperrwirkung bei reduzierter Entsperrkraft zu erreichen.

Zum besseren Verständnis der Erfindung wird diese anhand der nachfolgenden Figuren als Beispiel näher erläutert.

Es zeigen jeweils in stark schematisch vereinfachter Darstellung:
- Fig. 1: Einen Ausschnitt aus einer Getriebe-Synchronisationsvorrichtung in Seitenansicht mit teilweisem Axialschnitt;
- Fig. 2: den Ausschnitt nach Fig. 1 in Schrägansicht, teilweise geschnitten;
- Fig. 3: ein Detail der Getriebe-Synchronisationsvorrichtung nach Fig. 1 in Schrägansicht von links;
- Fig. 4: das Detail der Getriebe-Synchronisationsvorrichtung nach Fig. 1 in Schrägansicht von rechts;
- Fig. 5: das Detail der Getriebe-Synchronisationsvorrichtung nach Fig. 1 in Axialansicht;
- Fig. 6: das Detail der Getriebe-Synchronisationsvorrichtung nach Fig. 1, geschnitten gemäß der Linie VI-VI in Fig. 5;
- Fig. 7: einen Synchronring in Schrägansicht;
- Fig. 8: den Synchronring nach Fig. 7 in Draufsicht;
- Fig. 9: eine erste Ausführungsvariante eines Kraftverstärkungselementes in Frontansicht;
- Fig. 10: ein Kraftverstärkungselement nach Fig. 7 geschnitten gemäß der Linie VIII-VIII in Fig. 7;
- Fig. 11: das Kraftverstärkungselement nach Fig. 7 in Draufsicht;
- Fig. 12: das Kraftverstärkungselement nach Fig. 7 in Schrägansicht;
- Fig. 13: das Kraftverstärkungselement nach Fig. 7 in Seitenansicht;
- Fig. 14: einen Ausschnitt aus einer Ausführungsvariante einer Getriebe-Synchronisationsvorrichtung in Schrägansicht mit teilweisen Axialschnitt;
- Fig. 15: die Getriebe-Synchronisationsvorrichtung nach Fig. 12 in Draufsicht;
- Fig. 16: ein Detail der Getriebe-Synchronisationsvorrichtung nach Fig. 12 in Schrägansicht von links;
- Fig. 17: das Detail der Getriebe-Synchronisationsvorrichtung nach Fig. 12 in Schrägansicht von rechts;
- Fig. 18: das Detail der Getriebe-Synchronisationsvorrichtung nach Fig. 12 in Axialansicht;
- Fig. 19: das Detail der Getriebe-Synchronisationsvorrichtung nach Fig. 12, geschnitten gemäß der Linie XVII-XVII in Fig. 16;
- Fig. 20: eine Ausführungsvariante eines Synchronringes;
- Fig. 21: eine weitere Ausführungsvariante eines Kraftverstärkungselementes in Frontansicht;
- Fig. 22: das Kraftverstärkungselement nach Fig. 18 in Draufsicht;
- Fig. 23: das Kraftverstärkungselement nach Fig. 18 in Schrägansicht;
- Fig. 24: das Kraftverstärkungselement nach Fig. 18 in Ansicht von unten;
- Fig. 25: eine Schiebemuffe in Schrägansicht;
- Fig. 26: eine weitere Ausführungsvariante eines Kraftverstärkungselementes mit nur einer Servosynchronisationsschräge in Ansicht von unten;
- Fig. 27: eine Variante des Kraftverstärkungselementes nach Fig. 26 in Ansicht von unten;
- Fig. 28: eine weitere Ausführungsvariante des Kraftverstärkungselementes nach Fig. 26 in Schrägansicht;
- Fig. 29: eine andere Ausführungsvariante des Kraftverstärkungselementes nach Fig. 26 in Schrägansicht.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z. B. oben, unten, seitlich usw. auf die unmittelbar beschriebene sowie dargestellte Figur bezogen und sind bei einer Lageänderung sinngemäß auf die neue Lage zu übertragen.

Sämtliche Angaben zu Wertebereichen in gegenständlicher Beschreibung sind so zu verstehen, dass diese beliebige und alle Teilbereiche daraus mit umfassen, z. B. ist die Angabe 1 bis 10 so zu verstehen, dass sämtliche Teilbereiche, ausgehend von der unteren Grenze 1 und der oberen Grenze 10 mit umfasst sind, d. h. sämtliche Teilbereiche beginnen mit einer unteren Grenze von 1 oder größer und enden bei einer oberen Grenze von 10 oder weniger, z. B. 1 bis 1,7, oder 3,2 bis 8,1 oder 5,5 bis 10.

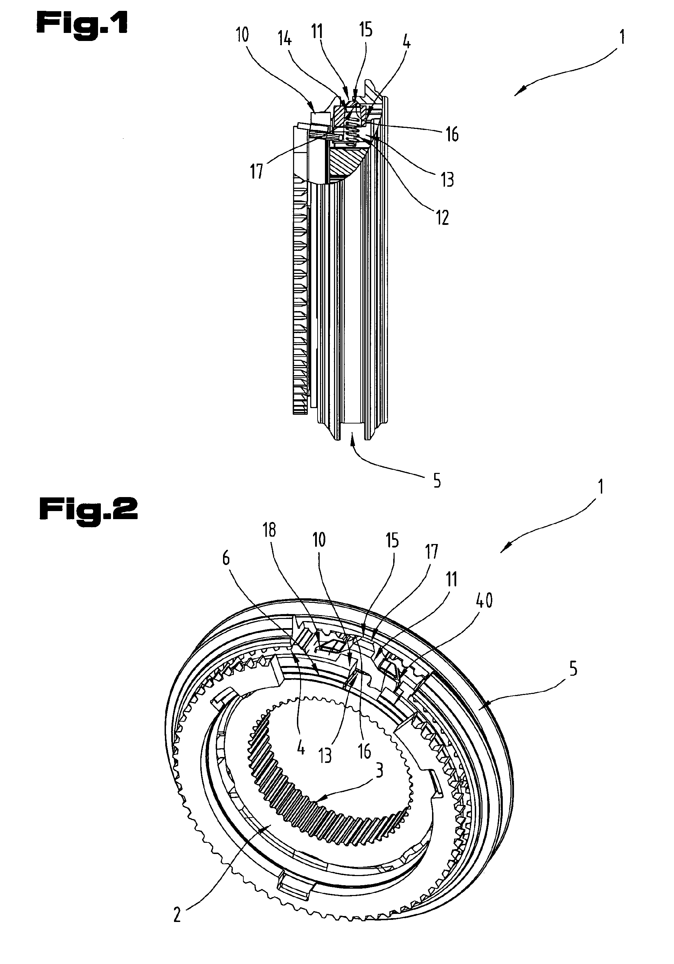

Die Fig. 1 und 2 zeigen einen Ausschnitt aus einer Getriebe-Synchronisationsvorrichtung 1, teilweise geschnitten. Da diese Getriebe-Synchronisationsvorrichtung 1 ähnlich dem Borg-Warner-Typ ist, und dieser ausreichend in der einschlägigen Literatur beschrieben und dem Fachmann bekannt ist, erübrigt sich eine weitere Erörterung von dessen prinzipieller Funktionsweise.

Die Getriebe- Synchronisationsvorrichtung 1 ist dazu ausgelegt, zwei benachbarte Losräder, also Gangzahnräder (nicht dargestellt) wahlweise mit einer Welle (nicht dargestellt) drehfest zu koppeln oder hiervon zu lösen.

Es besteht im Rahmen der Erfindung aber auch die Möglichkeit der Ausbildung einer einseitigen Synchronisationsvorrichtung, sodass also nur ein Losrad bzw. die zugehörigen Baugruppenteile, wie Reibpaket, Synchronring, Kupplungskörper etc., ebenfalls nur einfach vorhanden sein können.

Die Getriebe- Synchronisationsvorrichtung 1 umfasst eine Synchronnabe 2 mit einer inneren Steckverzahnung 3 zur drehfesten Verbindung der Synchronnabe 2 mit der Welle, sowie eine äußere Muffenverzahnung 4. Die Synchronnabe 2 ist mit herkömmlichen Mitteln axial unverschiebbar an der Welle angeordnet. An der Synchronnabe 2 ist eine Schiebemuffe 5 drehfest, jedoch axial verschiebbar gelagert. Diese ist z. B. von einer Schaltgabel (nicht gezeigt) betätigbar.

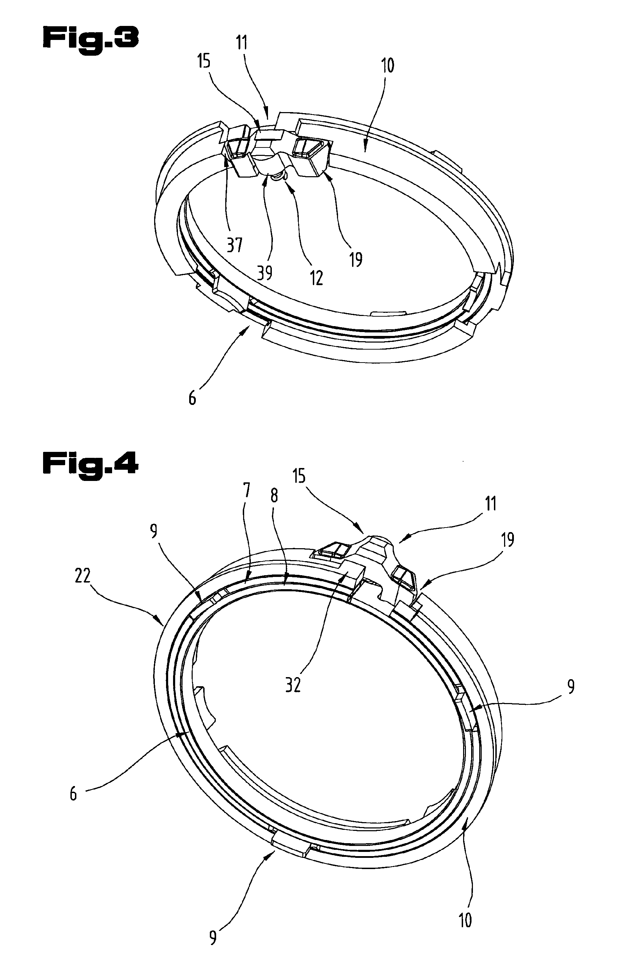

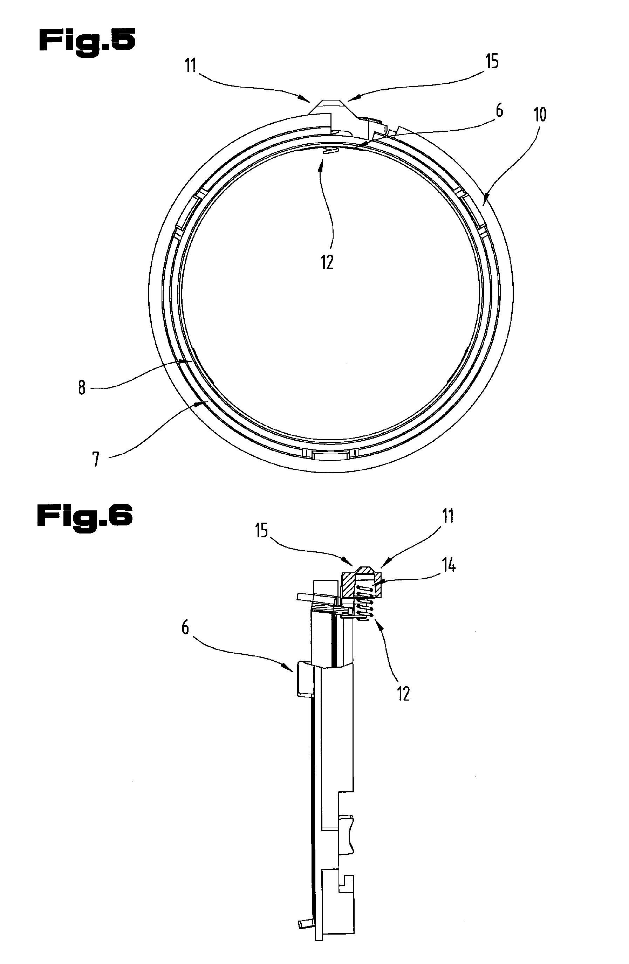

Weiters umfasst die Getriebe-Synchronisationsvorrichtung 1 je Schaltrichtung ein Reibpaket 6 - wie dies besser aus den Fig. 3 bis 6 ersichtlich ist - zumindest bestehend aus einem äußeren Konusring 7 und einem inneren Konusring 8, wobei auf den Konusringen 7, 8 an den entsprechenden zusammenwirkenden Oberflächen übliche Reibbeläge vorgesehen sein können. Der äußere Konusring 7 weist zumindest ein Mitnehmerelement 9 auf, das in Drehrichtung formschlüssig mit einem Kupplungskörper (nicht dargestellt) verbunden ist. Der Kupplungskörper ist drehfest mit dem jeweiligen Losrad, also dem Gangrad, verbunden. Beispielsweise kann der Kupplungskörper auf einem Konus des Losrades verdrehfest aufsitzen, wobei am Kupplungskörper entsprechende Freistellungen und am Konus des Losrades dazu komplementäre Nocken vorhanden sein können.

Andererseits ist es möglich, dass das Gangrad bspw. einen Konus aufweist, mit einer Stirnverzahnung, und der Kupplungskörper eine dazu passende Stirnverzahnung aufweist, wodurch die drehfeste Anordnung des Kupplungskörpers am Gangrad ermöglicht wird.

Radial außen und oberhalb des Reibpaketes 6 ist jeweils beidseitig der Synchronnabe 2 ein Synchronring 10 angeordnet.

Zwischen der Synchronnabe 2 und der Schiebemuffe 5 einerseits und in axialer Richtung zwischen den Reibpaketen 6 andererseits ist zumindest ein Kraftverstärkungselement 11 derart angeordnet, dass dieses über ein Federelement 12, das bei dieser Ausführungsvariante in einer Ausnehmung 13, insbesondere einer Sacklochbohrung, der Synchronnabe 2 einerseits und einer Ausnehmung 14 im Kraftverstärkungselement 11 andererseits angeordnet ist, gegen die Schiebemuffe 5 vorgespannt ist. Dazu weist das Kraftverstärkungselement 11 eine Mittenerhöhung 15 und die Schiebemuffe 5 an einer, auf das Kraftverstärkungselement 11 zugewandten Unterseite 16 eine in Umfangsrichtung verlaufende Schiebemuffennut 17 bzw. eine entsprechende Ausnehmung, in die die Mittenerhöhung 15 eingreift, auf. Auf die Federvorspannung kann gegebenenfalls auch verzichtet werden, wenn die Positionierung des Kraftverstärkungselementes 11 über die während des Betriebes der Getriebe-Synchronisationsvorrichtung 1 auftretenden Fliehkräfte erfolgt.

Das Federelement 12 kann wie im dargestellten Ausführungsbeispiel als Spiralfeder ausgeführt sein, ebenso ist bei geringfügiger Adaptierung die Ausbildung mit einem Plattfederelement, einer Ringfeder oder einer Gasfeder möglich.

Das in den Reibpaketen 6 anliegende Reibmoment während des Schaltvorganges wird unter anderem durch die Federrate des Federelementes 12 bestimmt.

Selbstverständlich ist es im Rahmen der Erfindung möglich, dass über den Umfang der Synchronnabe 2 verteilt, insbesondere symmetrisch, mehrere dieser Federelemente 12 in der Getriebe-Synchronisationsvorrichtung 1 angeordnet sind, insbesondere zwei oder drei pro Schaltrichtung bzw. Synchronisationsrichtung.

Das Kraftverstärkungselement 11 stellt den Kern der Erfindung dar. Durch dieses wird eine an dem Kraftverstärkungselement 11 anliegende Umfangskraft, welche durch das Reibmoment am Reibpaket 6 beim Synchronisationsvorgang hervorgerufen wird, in eine zusätzliche Axialkraft umgewandelt und damit eine Kraftverstärkung erreicht. Ein wesentliches Merkmal dieses Kraftverstärkungselementes 11 ist ein verschleißunabhängiger Verstärkungsmechanismus, d. h., dass sich ein aufgrund des Verschleißes im Reibpaket 6 ergebender größerer Axialweg keinen Einfluss auf den Verstärkungsmechanismus hat. Es gibt also keine Änderung der Stellung Sperrverzahnung/Schiebemuffe, wie dies z. B. bei dem aus dem Stand der Technik bekannten H-förmigen Druckstück der Fall ist, bei dem der Kontaktpunkt nach außen wandert und damit die Synchronstellung immer weiter in Umfangsrichtung verschoben wird. Bei der Erfindung wird dies durch einen Fixanschlag des Synchronringes 10 in einer Ausnehmung 18 in der Synchronnabe 2, welche das Kraftverstärkungselement 11 aufnimmt, erreicht.

Wie aus den Fig. deutlich ersichtlich ist, erstreckt sich das Kraftverstärkungselement 11 nach der Erfindung nicht über die gesamte Breite der Synchronnabe 2 in axialer Richtung. Bevorzugt ist das Kraftverstärkungselement 11, d. h. dessen Breite in axialer Richtung, so bemessen, dass sich das Kraftverstärkungselement 11 nur bis ca. 50 % der Breite der Synchronnabe 2 in diese erstreckt, insbesondere bis in den Bereich eines Mittensteges der Synchronnabe 2, wie dies unten stehend noch näher erläutert wird.

Wie besser aus den Fig. 3 und 4 bzw. 7 und 8 ersichtlich ist, weist der Synchronring 10 zumindest eine Ausnehmung 19 auf, bei dieser Ausführungsvariante drei Ausnehmung 19, in der das Kraftverstärkungselement 11 teilweise mit geringem Spiel in Umfangsrichtung des Synchronringes 10 aufgenommen ist. Insbesondere bedeutet dies, dass ein Abstand zwischen dem Synchronring 10 und dem Verstärkungselement 11 in Neutralstellung beidseits ausgewählt ist aus einem Bereich mit einer unteren Grenze von 0,5 mm und einer oberen Grenze von 10 mm, bzw. einem Bereich mit einer unteren Grenze von 1 mm und einer oberen Grenze von 5 mm.

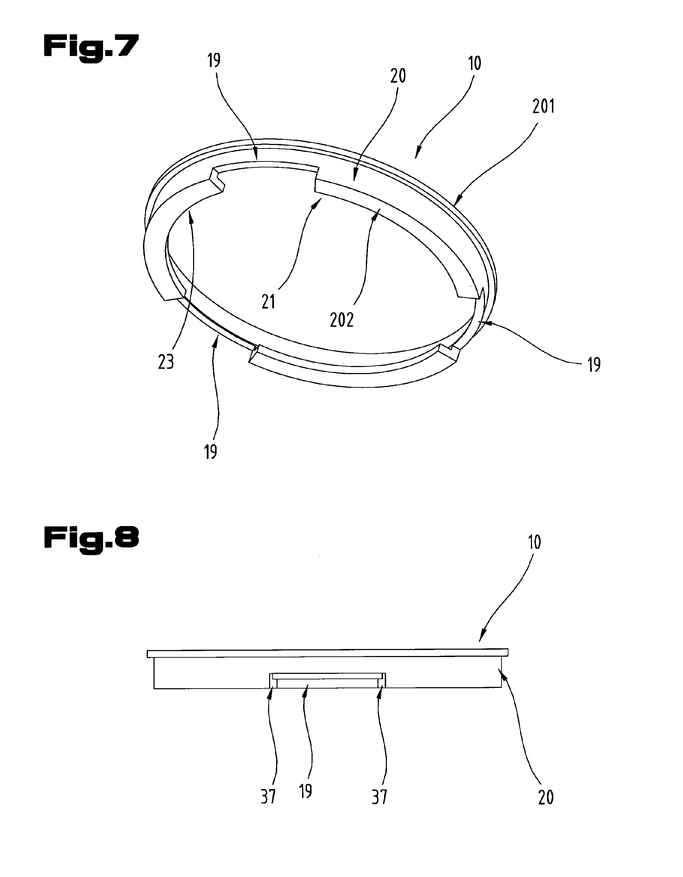

Durch das erfindungsgemäße Kraftverstärkungselement 11 bzw. den damit erreichten Aufbau der Getriebe-Synchronisationsvorrichtung 1 kann der Synchronring 10 hinsichtlich seiner Geometrie einfacher ausgeführt werden, indem dieser insbesondere keine Sperrverzahnung aufweisen muss, wie dies insbesondere aus den Fig. 7 und 8 ersichtlich ist.

Bei dieser Ausführungsvariante des Synchronringes 10 ist dieser durch einen Synchronringkörper 20 gebildet, der neben den drei Ausnehmungen 19 für die teilweise Aufnahme der Kraftverstärkungselemente 11, im Bereich eines inneren Umfanges 21 keine weiteren Ausnehmungen oder Vorsprünge, wie beispielsweise Mitnehmerelemente, aufweist, und ist somit mit Ausnahme der Ausnehmungen 19 nicht weiter unterbrochen. Auf der den Ausnehmungen 19 in axialer Richtung gegenüberliegenden Seite des Synchronringkörpers 20 ist ein Ringsteg 201 ausgebildet. Der innere Umfang 21 wird durch einen weiteren Ringsteg 202 gebildet, der nur durch die Ausnehmungen 19 unterbrochen ist. Aufgrund dieser Einfachheit der Geometrie des Synchronringes 10 ergeben sich deutliche Vorteile für dessen Herstellung im Vergleich zu Synchronringen wie sie aus dem Stand der Technik bekannt sind. Insbesondere wird dieser Synchronring 10 als Sinterbauteil ausgebildet.

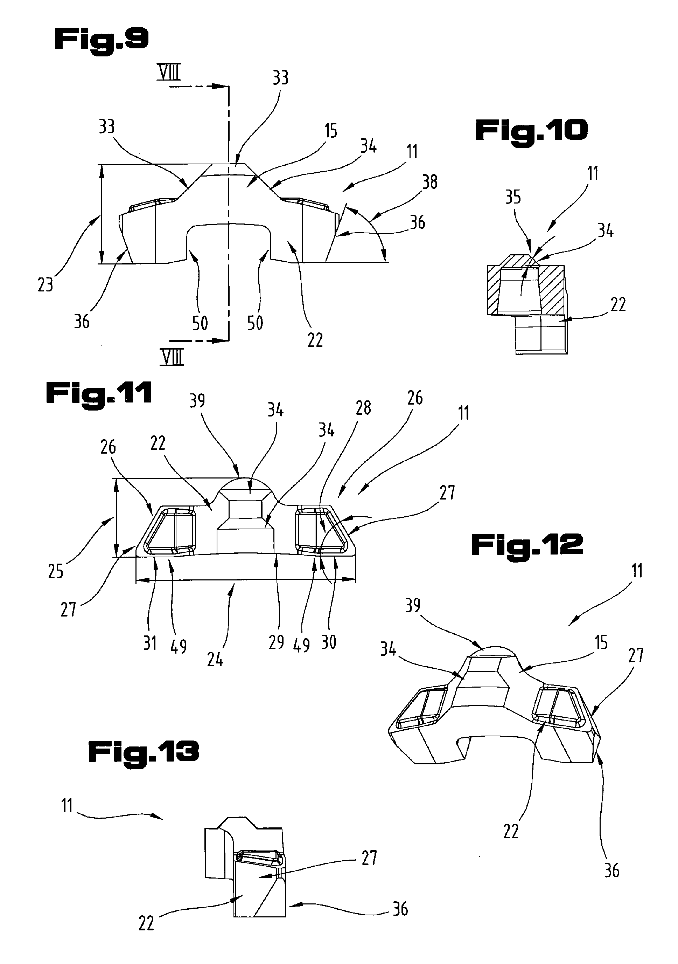

Das Kraftverstärkungselement 11 dieser ersten Ausführungsvariante ist besser aus den Fig. 9 bis 13 ersichtlich, welche das Kraftverstärkungselement 11 in unterschiedlichen Ansichten darstellen.

Wie aus Fig. 9 ersichtlich ist, weist bei dieser Ausführungsvariante das Kraftverstärkungselement 11 in Frontansicht betrachtet, also in Einbaulage in axialer Richtung betrachtet, einen annähernd u-förmigen Querschnitt auf. Mittig, d.h. zwischen den beiden Schenkeln dieses Profilquerschnitts wird das Federelement 12 wie voranstehend beschrieben angeordnet (z. B. Fig. 3). Die beiden Randbereiche neben der Mittenerhöhung 15 auf der Oberseite des Kraftverstärkungselementes 11, d. h. jener Seite die der Schiebemuffe 5 im eingebauten Zustand gegenüberliegend angeordnet sind, sind nach unten geneigt ausgebildet, wie dies aus Fig. 9 ersichtlich ist. Zwischen diesen Randbereichen und der Mittenerhöhung ist ein, bevorzugt stumpfer, Winkel ausgebildet (in der Frontansicht nach Fig. 9 betrachtet), der insbesondere einen Wert aufweisen kann, der ausgewählt ist aus einem Bereich mit einer unteren Grenze von 20 ° und einer oberen Grenze von 140 °, bevorzugt aus einem Bereich mit einer unteren Grenze von 95 ° und einer oberen Grenze von 140 °.

Das Kraftverstärkungselement 11 weist einen Grundkörper 22 auf, der eine Höhe 23, eine Längserstreckung 24 sowie eine Breitenerstreckung 25 aufweist. Die Längserstreckung 24 ist dabei im eingebauten Zustand des Kraftverstärkungselementes 11 in Umfangsrichtung der Synchronnabe 2 (Fig. 2), die Breitenerstreckung 25 ist in axialer Richtung der Getriebe-Synchronisationsvorrichtung 1 (Fig. 2) ausgerichtet, wobei die Längserstreckung 24 größer ist als die Breitenerstreckung 25, sodass sich das Kraftverstärkungselement 11 nur über einen Bereich bis ca. annähernd zwischen 40 % und 60 %, insbesondere zwischen 45 % und 50 %, der Breite der Synchronnabe 2 in dieser erstreckt, also im Vergleich zu den aus dem Stand der Technik bekannten Druckstücken, die sich in der Regel über annähernd die gesamte Breite der Synchronnabe erstrecken, eine deutlich geringere Erstreckung in axialer Richtung der Getriebe-Synchronisationsvorrichtung 1 aufweist. In in Richtung der Längserstreckung 24 einander gegenüberliegenden, distalen Endbereichen 26 ist jeweils eine schräge Funktionsfläche 27, die Servosynchronisationsschräge, derart ausgebildet, dass diese senkrecht auf eine durch die Längserstreckung 24 und die Breitenerstreckung 25 definierte Querschnittsebene steht. Erfindungsgemäß sind diese Funktionsflächen 27 in entgegengesetzter Richtung, vorzugsweise gegengleich (es sind im Rahmen der Erfindung hinsichtlich der Winkel auch eine asymmetrische Ausführungen möglich), gegen die Längserstreckung 24 geneigt ausgebildet, wobei die Funktionsflächen 27 jeweils in einem spitzen Winkel 28 zur größten Längserstreckung 24 des Grundkörpers 22 orientiert sind. Dabei ist diese größte Längserstreckung 24 des Grundkörpers 22 bei dieser Ausführungsvariante an der Rückseite des Kraftverstärkungselementes 11 ausgebildet, welche teilweise in der Ausnehmung 19 des Synchronringes 10 an diesem anliegt, wie dies aus Fig. 3 ersichtlich ist. Anders ausgedrückt verlaufen die Funktionsflächen 27 schräg gegenüber der Drehebene des Synchronringes 10.

Der spitze Winkel 28, in dem die Funktionsflächen.27 zur größten Längserstreckung 24 des Kraftverstärkungselementes 11 verlaufen, weist bei dieser Ausführungsvariante des Kraftverstärkungselementes 11 einen Absolutwert von 60° auf. Generell kann dieser Winkel im Rahmen der Erfindung aber auch aus den voranstehend genannten Bereichen ausgewählt werden.

Zumindest eine der Funktionsflächen 27 muss aber nicht zwingenderweise senkrecht auf die besagte Querschnittsebene stehen, sondern kann auch in einem Winkel zu dieser angeordnet sein, also schief zu dieser stehen. Der Winkel kann dabei ausgewählt sein aus einem Bereich mit einer unteren Grenze von 1 ° und einer oberen Grenze von 75 °, bzw. aus einem Bereich mit einer unteren Grenze von 10 ° und einer oberen Grenze von 65 °, bzw. aus einem Bereich mit einer unteren Grenze von 15 ° und einer oberen Grenze von 55 °.

Die Funktionsflächen 27 weisen eine Größe von ca. 38 mm² auf. Diese kann aber generell im Rahmen der Erfindung aus einem der voranstehend genannten Bereiche ausgewählt werden.

Wie insbesondere aus Fig. 11 ersichtlich ist weist diese Variante des Kraftverstärkungselementes 11 ca. eine Drittelteilung auf, d. h. das die Mittenerhöhung 15 (Fig. 9) und die beiden Randbereiche bzw. Endbereiche 26 beginnende ca. ab dem Übergang von der Mittenerhöhung (stumpfer Winkel in Fig. 9) jeweils ca. ein Drittel der Längserstreckung 24 einnehmen. Diese Teilung kann auch derart vorgesehen werden, dass die beiden Endbereich 26 jeweils zwischen 25 % und 40 %, insbesondere zwischen 28 % und 35 % der Längserstreckung 24 einnehmen und der Rest durch die Mittenerhöhung gebildet wird.

Es kann jedoch auch vorgesehen sein, dass der für die Rückschaltfunktion vorgesehene Endbereich 26 (rechter Endbereich 26 in Fig. 11) länger ist als der zweite, für die Hochschaltfunktion vorgesehene Endbereich 26.

Das Kraftverstärkungselement 11 greift an der Stirnfläche in der Ausnehmung 19 des Synchronringes 10 an, welche in Richtung auf die Synchronnabe 2 weist. Durch eine Freistellung 29 im Kraftverstärkungselement 11 im Bereich des Synchronringes 10 weist das Krafterstärkungselement 11 zwei Anlageflächen 30, 31 am Synchronring 10 auf. Dies hat insbesondere den Vorteil, dass bei Vorhandensein von mehreren Kraftverstärkungselementen 11 über den Umfang der Synchronnabe 2 eine bessere Kraftverteilung möglich ist. Beispielsweise erhält man also bei drei Kraftverstärkungselementen 11 sechs Angriffs- bzw. Funktionsflächen. Insbesondere liegen die Angriffsflächen 30, 31 zumindest annähernd auf der gleichen Höhe bzw. in der gleichen Ebene, auf der bzw. in der die Druckkraft auf der schiefen Ebene bzw. Rampe in der Synchronnabe 2 ausgeübt wird, damit kein zusätzliches Moment übertragen wird und damit einem Verkippen vorgebeugt werden kann.

Der Synchronring 10 kann einen in axialer Richtung über den Ringsteg 201 vorragenden nockenartigen Vorsprung 32 (Fig. 4) aufweisen, der mit dem Fixanschlag der Synchronnabe 2 zusammenwirkt, wie dies voranstehend beschrieben ist, und begrenzt somit seine Beweglichkeit in Umfangsrichtung. Dieser Vorsprung 32 muss nicht zwingend vorhanden sein, wie dies die Ausführungsvariante des Synchronringes 10 nach den Fig. 7 und 8 zeigt.

Die Synchronnabe 2 weist an ihrem äußeren Umfang, d. h. im Bereich der Muffenverzahnung 4 über den Umfang verteilt, mehrere Ausnehmungen 18 auf, in die die nockenartigen Vorsprünge 32 der Synchronringe 10 eingreifen können, sodass also auch das oder die Kraftverstärkungselement(e) 11 in diesen Ausnehmungen 18 zumindest teilweise angeordnet ist bzw. sind.

Die Mittenerhöhung 15 des Kraftverstärkungselementes 11 ist bei dieser Ausführungsform im Querschnitt betrachtet trapezförmig ausgebildet mit insbesondere gegengleich in Richtung auf die distalen Funktionsflächen 24 schräg abfallenden Rampen 33. Es besteht allerdings auch die Möglichkeit, dass diese Querschnittsform der Mittenerhöhung 15 im Rahmen der Erfindung geändert wird, bspw. diese durch eine stegartige Erhöhung gebildet ist. Eine Breite in Längserstreckung 24 dieser Mittenerhöhung 15 ist so bemessen, dass die Anordnung des Kraftverstärkungselementes 11 mit der Mittenerhöhung 15 in der Ausnehmung 19 der Synchronnabe 2 ermöglicht wird. Durch die Ausbildung dieser Mittenerhöhung 15 mit trapezförmigem Querschnitt wird die relative Verstellbarkeit des Kraftverstärkungselementes 11 zur Synchronnabe 2, d. h. die Anordnung des Kraftverstärkungselementes 11 in der Ausnehmung 19 vereinfacht. Die Höhe dieser Mittenerhöhung 15 entspricht zumindest annähernd der Verzahnungshöhe der Synchronnabe 2.

Weiters weist die Mittenerhöhung 15 zumindest eine weitere Funktionsfläche 34 auf, die in Richtung der Breitenerstreckung 25 geneigt ist. Bevorzugt sind zwei derartige, gegengleich geneigte weitere Funktionsflächen 34 auf der Mittenerhöhung 15 ausgebildet, sodass diese auch in Richtung der Längserstreckung 24 betrachtet einen zumindest annähernd trapezförmigen Querschnitt aufweist. Insgesamt ist also die Mittenerhöhung 15 bei dieser Ausführungsvariante also pyramidenstumpfförmig ausgebildet. Die Funktionsflächen 34 sind dabei ebenfalls trapezförmig ausgebildet, bevorzugt als gleichschenkeliges Trapez. Das Kraftverstärkungselement 11 liegt über diese weitere(n) Funktionsfläche(n) 34 in der Schiebemuffennut 17 an, wozu diese Schiebemuffennut 17 bevorzugt komplementär geneigte Anlageflächen aufweist, wie dies aus Fig. 1 ersichtlich ist.

Ein Absolutwert eines Winkels 35, mit dem die weiteren Funktionsflächen 34 der Mittenerhöhung 15 geneigt sind, kann bevorzugt ausgewählt sein aus einem Bereich mit einer unteren Grenze von 10 ° und einer oberen Grenze von 80 °, insbesondere aus einem Bereich mit einer unteren Grenze von 20 ° und einer oberen Grenze von 60 °. Für die beiden weiteren Funktionsflächen 34 sind auch zueinander unterschiedliche Neigungswinkel möglich.

Es ist weiters bevorzugt, wenn zumindest eine der Kanten der spitzen Winkel 28 der Funktionsflächen 27 in den distalen Endbereichen 26 unter Ausbildung zusätzlicher Funktionsflächen 36 zumindest teilweise gebrochen ist, wie dies aus den Fig. 12 und 13 ersichtlich ist. Diese weiteren Funktionsflächen 36 dienen zu Anlage an eine Wandfläche 37 in der Ausnehmung 19 des Synchronringes 10 (Fig. 3 und 8). Diese zusätzlichen Funktionsflächen 36 sind zumindest annähernd dreieckförmig, beispielsweise in Form eines rechtwinkeligen oder gleichschenkeligen Dreiecks, ausgebildet. Durch die Anordnung dieser zusätzlichen Funktionsflächen 36 weisen die Funktionsflächen 27 eine deutlichere trapezoide Form (asymmetrisches bzw. beliebiges Trapezoid) als ohne diese auf, wobei die kürzere der parallelen Seiten im Bereich der zusätzlichen Funktionsflächen 36 ausgebildet sind. Es ist auch möglich, dass die Funktionsflächen 27 die Form eines unregelmäßigen Vierecks haben.

Es sein an dieser Stelle erwähnt, dass sich die Beschreibung der Form der Funktionsflächen 27, 34 und 36 auf die Draufsicht auf diese bezieht.

Ein Verhältnis der Länge der unteren Basisseite zur Höhe der jeweiligen Fläche kann für die Funktionsflächen 27 ausgewählt sein aus einem Bereich mit einer unteren Grenze von 1 : 3 und einer oberen Grenze von 1 : 6 und für die Funktionsflächen 34 ausgewählt sein aus einem Bereich mit einer unteren Grenze von 1 : 5 und einer oberen Grenze von 1 : 20, jeweils bezogen auf die Abmessung in mm. Dabei ist die Basisseite die längste Seite des Vierecks. Die Höhe wird im rechten Winkel zur Basisseite bestimmt.

Die Höhe der dreieckförmigen Funktionsfläche 36 kann ausgewählt sein aus einem Bereich mit einer unteren Grenze von 2 mm und einer oberen Grenze von 10 mm.

Sämtliche Angaben zu den Abmessungen der Funktionsflächen 27, 34, 36 sind auf die jeweilige Fläche selbst bezogen, d. h. unabhängig vom jeweiligen Neigungswinkel.

Beidseits neben der Mittenerhöhung 15 weist der Grundkörper 22 in Richtung der Mittenerhöhung 15 vorspringende höckerartige Vorsprünge auf, die in Draufsicht betrachtet (Fig. 11) einen zumindest annähernd trapezförmigen Querschnitt aufweisen. Diese Vorsprünge sind in Richtung auf die distalen Endbereiche des Grundkörpers 11 geneigt ausgebildet (Fig. 9), wobei die Bereich der Vorsprünge die näher an der Mittenerhöhung 15 angeordnet sind eine geringere Neigung aufweisen, als jene Bereich die im Bereich der distalen Endbereiche 26 angeordnet sind. Der Übergang zwischen den Neigungen ist dabei ca. auf der Höhe des Beginns der Freistellung 29 entlang der Rückseite des Kraftverstärkungselementes 11 ausgebildet.

Generell sei angemerkt, dass mehrere oder sämtliche Kanten des Kraftverstärkungselementes gebrochen sein können bzw. insbesondere mit Rundungen versehen sein können.

In einer besonderen Ausführungsvariante sind diese zusätzlichen Funktionsflächen 36 in Richtung der Längserstreckung 24 geneigt ausgebildet, wobei ein Absolutwert eines Winkels 38 ausgewählt sein kann aus einem Bereich mit einer unteren Grenze von 20 ° und einer oberen Grenze von 90 ° bzw. aus einem Bereich mit einer unteren Grenze von 50 ° und einer oberen Grenze von 85 °. Auch diese zusätzlichen Funktionsflächen 36 sind insbesondere gegengleich geneigt ausgebildet, wobei die Neigung derart ist, dass eine Länge des Grundkörpers 22 in Richtung auf die Mittenerhöhung 15 größer wird.

Vorzugsweise weisen auch die mit diesen zusätzlichen Funktionsflächen 36 in Wirkverbindung bringbaren Wandflächen 37 der Ausnehmung 19 des Synchronringes 10 eine zur Neigung der zusätzlichen Funktionsflächen 36 komplementäre Neigung auf, wie dies aus Fig. 3 bzw. Fig. 8 ersichtlich ist.

Die zusätzlichen Funktionsflächen 36 und/oder die weiteren Funktionsflächen 34 und/oder die mit diesen in Anlage bringbaren Flächen des Synchronringes 10 bzw. der Schiebemuffe 5 können auch anders ausgebildet sein, beispielsweise keine Neigung oder eine mehrfach abgestufte Neigung aufweisen.

Obwohl die flächige Anlage der Funktionsflächen 27 an die entsprechenden Rampen der Synchronnabe 2 die bevorzugt Ausführung ist, besteht im Rahmen der Erfindung auch die Möglichkeit einer Punktauflage bzw. Linienauflage der Funktionsflächen 27 an den Rampen. Dazu können entweder die Rampen in der Synchronnabe 2 oder die Funktionsflächen 27 gekrümmt ausgeführt sein.

Diese Funktionsflächen 27 müssen nicht zwangsweise quadratisch oder rechteckig ausgebildet sein, insbesondere bei Ausbildung der schräg nach unten gerichteten zusätzlichen Funktionsflächen 36.

Eine nach vorne weisende Stirnfläche 39 des Kraftverstärkungselementes 11, d. h. die in Richtung auf die in der gedachten Verlängerung der Funktionsflächen 27 durch diese gebildete Schnittkante weisende Stirnfläche 39, ist gerundet ausgebildet. In einer Abwandlung dazu besteht auch die Möglichkeit, dass diese Stirnfläche 39 im Wesentlichen ebenflächig ausgebildet ist und gegebenenfalls dafür Übergangsbereiche zu daran anschließenden Flächen mit Rundungen versehen sind.

Durch diese vorspringende Stirnfläche 39 ist es möglich, die Mittenerhöhung 15 bei verbesserter Stabilität des Kraftverstärkungselementes 11 azentrisch anzuordnen, wie dies insbesondere aus Fig. 11 bzw. 13 ersichtlich ist.

Die Synchronnabe 2 weist unterhalb der Muffenverzahnung 4 und oberhalb der Steckverzahnung 3 in der Ausnehmung 18 zu den Funktionsflächen 25 zumindest annähernd komplementär, d. h. mit einem Supplementwinkel zum spitzen Winkel 30 der distalen Endbereiche des Kraftverstärkungselementes 11, verlaufende schräge Funktionsflächen 40 (Fig. 2), d. h. die bereits erwähnten Rampen, auf, die gegebenenfalls gerundet ausgeführt sein können, wobei die Muffenverzahnung 4 sich über diesen schrägen Funktionsflächen 40 in Umfangsrichtung erstrecken kann. Dazu kann die Synchronnabe 2 einen sich in Umfangsrichtung erstreckenden ringförmigen Steg aufweisen, an dem diese Funktionsflächen 40 ausgebildet sind. Der Abstand in Umfangsrichtung zwischen den beiden Funktionsflächen 40 ist dabei so bemessen, dass das Kraftverstärkungselement 11 mit einem Spiel zwischen den Funktionsflächen 27 und den Funktionsflächen 40 angeordnet werden kann, also dessen Axialverschiebung in der Ausnehmung möglich ist, oder das das Kraftverstärkungselement 11 in Neutralstellung an diesen Funktionsflächen 40 anliegt und während der Synchronisation an diesen abgleitet. Durch die Axialverschiebung des Kraftverstärkungselementes 11, verursacht durch die Verschiebung der Schiebemuffe 5 und die Kopplung mit dem inneren Konusring 8, wird durch die schrägen Funktionsflächen 27 eine Servokraft zusätzlich zur Axialkraft aufgrund der Schaltkraft über die Schaltgabel, die in die Schiebemuffe 5 eingreift, erzeugt und damit eine Kraftverstärkung hervorgerufen. Diese Kraftverstärkung ist dabei unabhängig vom Verschleiß in den Reibpaketen 6, wie dies bereits voranstehend ausgeführt wurde.

Bei der erfindungsgemäßen Getriebe-Synchronisationsvorrichtung 1 erfolgt die Kopplung des inneren Konusringes 8, d. h. des Reibringes, nicht zum Synchronring 10 sondern zum Kraftverstärkungselementes 11, sodass der Synchronring 10 baulich einfacher ausgeführt werden kann. Der Synchronring 10 kann also zum Unterschied zum Synchronring der Synchronisationsvorrichtung z.B. nach der DE 694 06 413 T2 bzw. der Borg-Warner Synchronisation ohne in axialer Richtung bzw. radialer Richtung nach unten vorspringende Koppelelemente oder Fortsätze als Anschlagflächen für Federelemente ausgebildet werden. Dessen auf die Synchronnabe 2 weisende Stirnfläche kann als zumindest im Wesentlichen ebenflächig ausgebildet sein.

Initiiert durch die axiale Verschiebung der Schiebemuffe 5, beispielsweise ausgelöst durch den Schaltvorgang eines Fahrers, wird im Reibpaket 6 ein Reibmoment über die Konusringe 7, 8 durch die Verschiebung des Kraftverstärkungselementes 11 in axialer Richtung durch Abgleiten der Funktionsfläche 27 entlang der Rampe/Funktionsfläche 40 der Synchronnabe 2 erzeugt. Dieses Reibmoment wirkt über den inneren Konusring 8 auf das Kraftverstärkungselement 11, sodass dieses axial verschoben wird, und damit die verstärkende Servokraft erzeugt wird. Der Synchronring 10 wird durch das Kraftverstärkungselement 11 ebenfalls in Schaltrichtung auf das gewünschte Gangrad (Losrad) axial verschoben und verdreht, bis dieser seine Synchronisationsstellung erreicht und die Schiebemuffe 5 unter Überdrückung der Federkraft des Federelementes 11 die Wirkverbindung mit dem gewünschten Gangrad herstellen kann. Gleichzeitig werden über die Vorsprünge 9 des äußeren Konusringes 7 der dem Gangrad zugehörige Kupplungskörper und damit das Gangrad bis zur Kupplung in Kupplungsseite in die Synchronstellung verdreht.

Das Kraftverstärkungselement 11 wird in der Getriebe-Synchronisationsvorrichtung 1 nach der Erfindung in axialer und in radialer Richtung bewegt und ist drehbeweglich gelagert. Das Kraftverstärkungselement 11 ist hingegen nicht kippbeweglich gelagert.

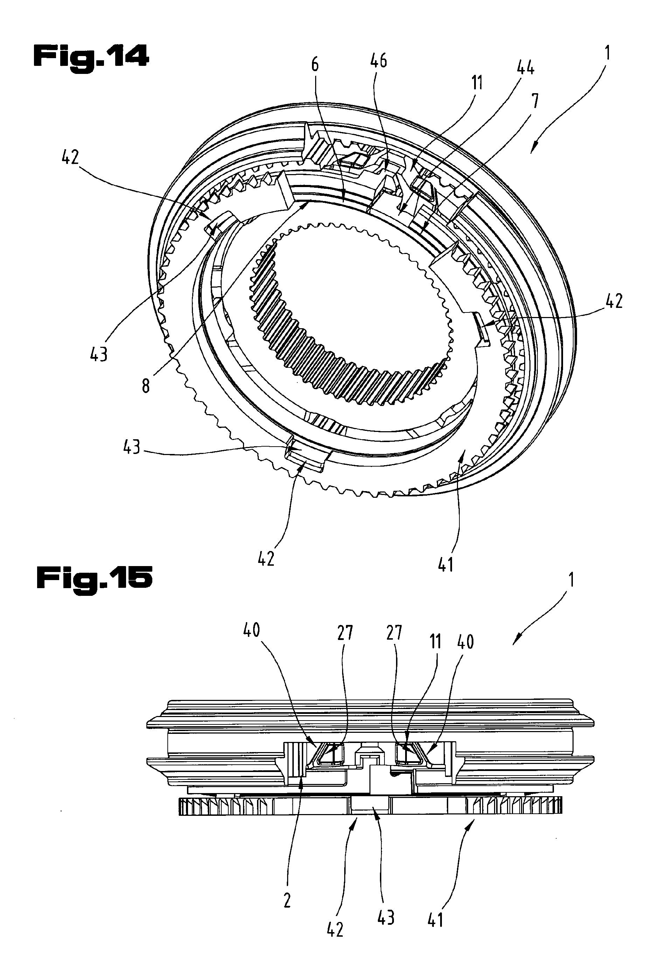

Die Fig. 14 und 15 zeigen ein Detail einer Ausführungsvariante der Getriebe- Synchronisationsvorrichtung 1. Dabei sind gleiche Teile mit gleichen Bezugszeichen versehen, sodass hierzu auf die Ausführungen zu den Fig. 1 bis 13 verwiesen sei.

Es sei nochmals daraufhingewiesen, dass in den Figuren nicht eine gesamte Getriebe- Synchronisationsvorrichtung 1 eines Mehrgangwechselgetriebes aus Übersichtsgründen dargestellt ist, sondern nur jene für die Erfindung wesentlichen Elemente derselben, um deren Funktionsweise zu verstehen. Es sei hierzu auf die einschlägige Literatur verwiesen, z. B. auf den Borg-Warner-Typ. Generell kann die Kraftverstärkung auch für einseitige Synchronisationen verwendet werden.

Wie bei der voranstehend beschriebenen Ausführungsvariante weist auch hier ein Kupplungskörper 41 Ausnehmungen 42 für den Eingriff von Mitnehmerelementen 43 des inneren Konusrings 7 des Reibpaketes 6 auf.

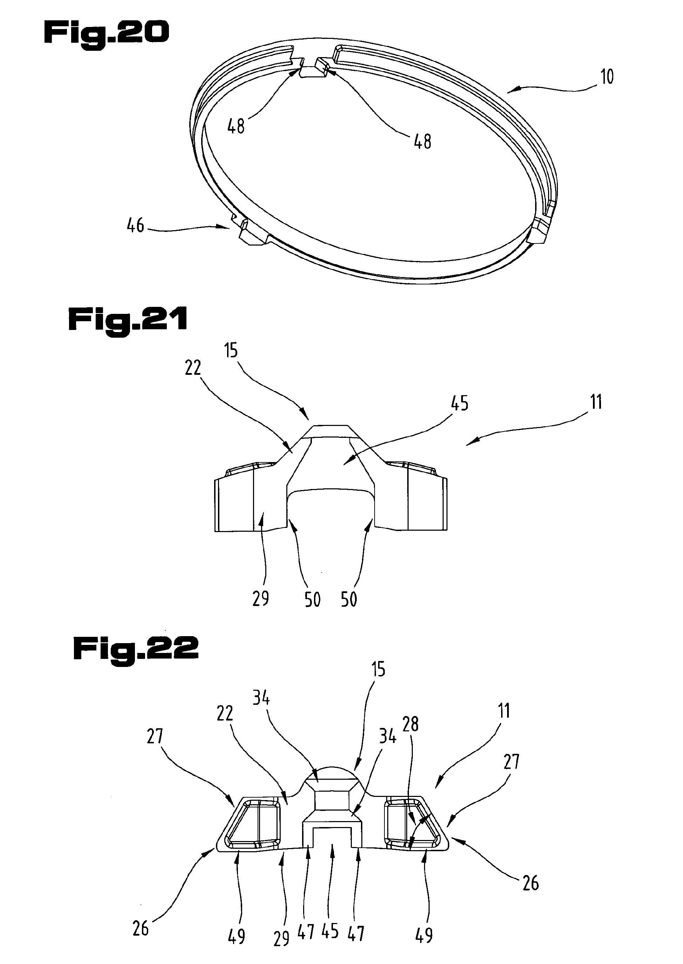

Das Kraftverstärkungselement 11, dass besser aus den Fig. 21 bis 24 ersichtlich ist, ist wiederum mit einem U-förmigen Querschnitt ausgebildet, um, wie auch bei der voranstehend beschriebenen Variante, den Eingriff eines Mitnehmerelementes 44 des inneren Konusringes 8 des Reibpaketes 6 zu ermöglichen.

Des Weiteren weist das Kraftverstärkungselement 11 die beiden gegengleich geneigten Funktionsflächen 27 auf, die an den komplementär geneigten Rampen, d. h. Funktionsflächen 40 des Synchronnabe 2 zur Kraftverstärkung anlegbar sind, und die Funktionsflächen 34 auf der Mittenerhöhung 15.

Wie insbesondere aus den Fig. 21 bis 24 ersichtlich ist, ist das Kraftverstärkungselement 11 ohne die beiden Funktionsflächen 36 (Fig. 9) im Bereich der spitzen Winkel 28 in den distalen Endbereichen 26 ausgeführt, sondern sind diese Kanten lediglich mit einer Rundung versehen.

Hinsichtlich der geometrischen Ausgestaltung der Funktionsflächen 27 und 34 sei auf voranstehende Ausführungen zum Kraftverstärkungselement 11 der ersten Ausführungsvariante verwiesen, wobei die distalen Funktionsflächen 27 in diesem Fall auch zumindest annähernd quadratisch oder zumindest annähernd rechteckförmig ausgebildet sein können.

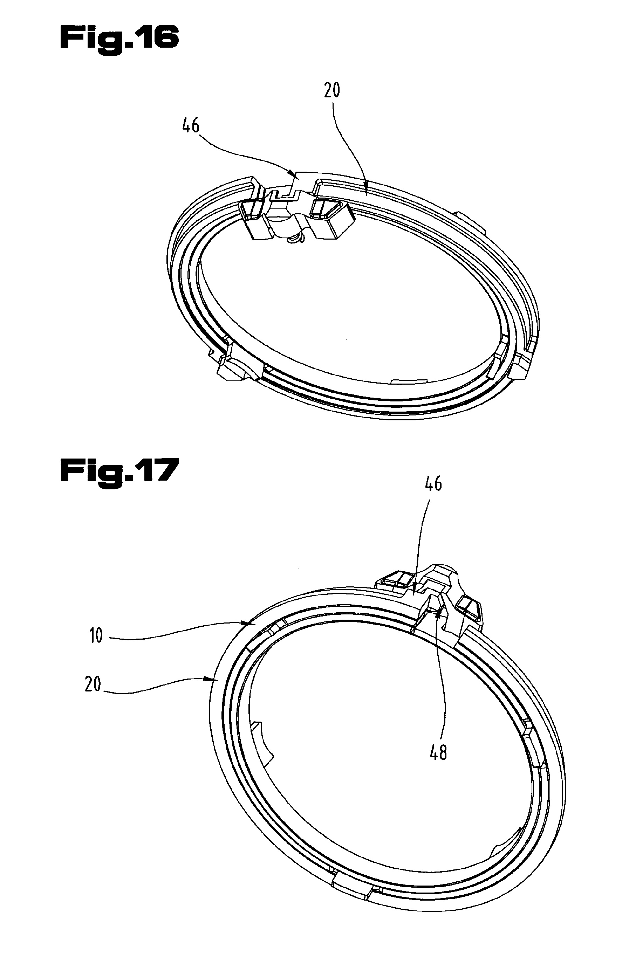

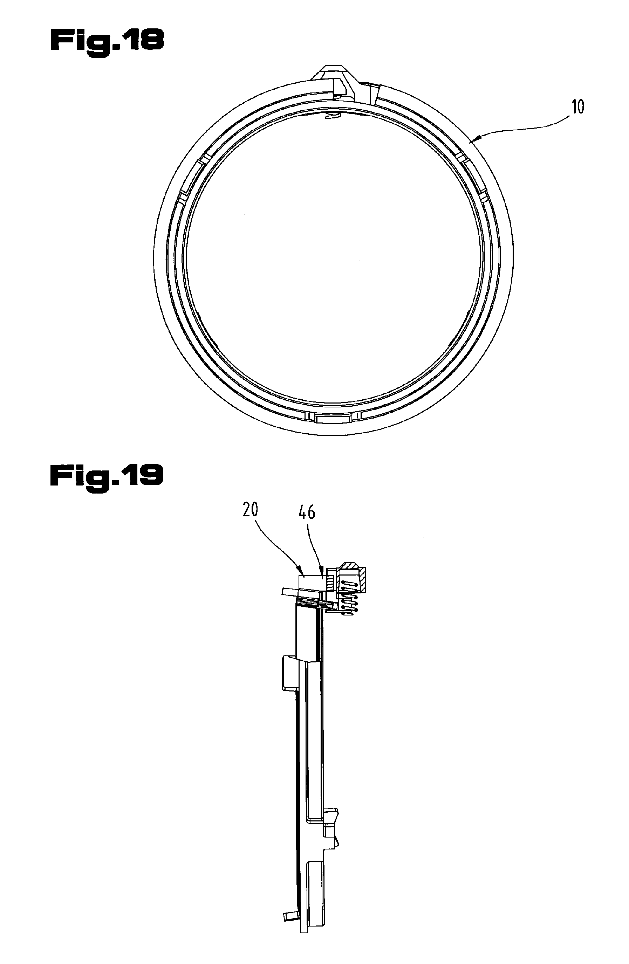

Wesentlicher Unterschied zum Kraftverstärkungselement 11 nach den Fig. 9 bis 13 ist, dass an der Rückseite des Kraftverstärkungselementes 11 zwischen der Freistellung 29 und der Mittenerhöhung 15 bzw. bis in die Mittenerhöhung 15 hinein ragend, eine nach hinten offene Ausnehmung 45 im Grundkörper 22 vorgesehen ist, die zur Aufnahme von Mitnehmerelementen 46 des Synchronringes 10, die in axialer Richtung vom Synchronringkörper 20 abstehen, dient, wie dies besser aus den Fig. 16 bis 19 ersichtlich ist. Mit anderen Worten wird also der Synchronring 10 bei dieser Variante über die Mitnehmerelemente 46 in das Kraftverstärkungselement 11 "eingehängt", während bei der ersten Variante das Kraftverstärkungselement 11 in die Ausnehmung 19 des Synchronringes 10 "eingehängt" wird. Durch diese Ausnehmung 45 wird eine feste Verbindung zwischen dem Kraftverstärkungselement 11 und dem Synchronring 10 ermöglicht. Bei der voranstehend beschriebenen Ausfiihrungsform wird diese Verbindung des Kraftverstärkungselementes 11 mit dem Synchronring 10 über die Ausnehmungen 19 im Synchronring 10 ermöglicht.

Die Ausnehmung 45 weist zumindest zwei einander gegenüberliegende, zumindest teilweise schräg nach oben und aufeinander zu verlaufende Seitenwände 47 auf. Bei der Variante des Kraftverstärkungselementes 11 nach den Fig. 21 bis 24 ist auch die Rückseite schräg nach oben verlaufend ausgebildet, allerdings mit einer Neigung in Richtung auf die Mittenerhöhung 15. Ebenso weist das Mitnehmerelement 46 am Synchronring 10 abgeschrägte Seitenflächen 48 auf, wie dies insbesondere auch aus Fig. 20 ersichtlich ist, welche nur den Synchronring 10 zeigt, deren Neigung insbesondere komplementär zur Neigung der schrägen Seitenwände ausgebildet ist, sodass diese Flächen besser aufeinander abgleiten können.

Zu den weiteren Details des Kraftverstärkungselementes 11 dieser zweiten Variante sei zur Vermeidung von Wiederholungen auf die Ausführungen zur ersten Variante verwiesen.

Neben den Funktionsflächen 27 weisen die Verstärkungselemente 11 nach den Ausführungsvarianten weitere Funktionsflächen 49, 50 (Fig. 9, 11 bzw. Fig. 21, 22) auf, nämlich die Angriffsflächen für den Synchronring 10 (Funktionsflächen 49) an den beiden distalen Endbereichen 26 im Anschluss an die Funktionsflächen 27, die mit diesen den spitzen Winkel 28 ausbilden, bzw. nur eine hiervon, und aufgrund des Federelementes 12 an den Innenflächen der Endbereiche 26, die diesem Federelement 12 gegenüber liegen. Zwischen den Funktionsflächen 49 ist auch die voranstehend angesprochene Freistellung 29 im Kraftverstärkungselement 11 für den Synchronring 10 ausgebildet. Die Funktionsflächen 50 wirken bei der Rückstellung des Kraftverstärkungselementes 11.

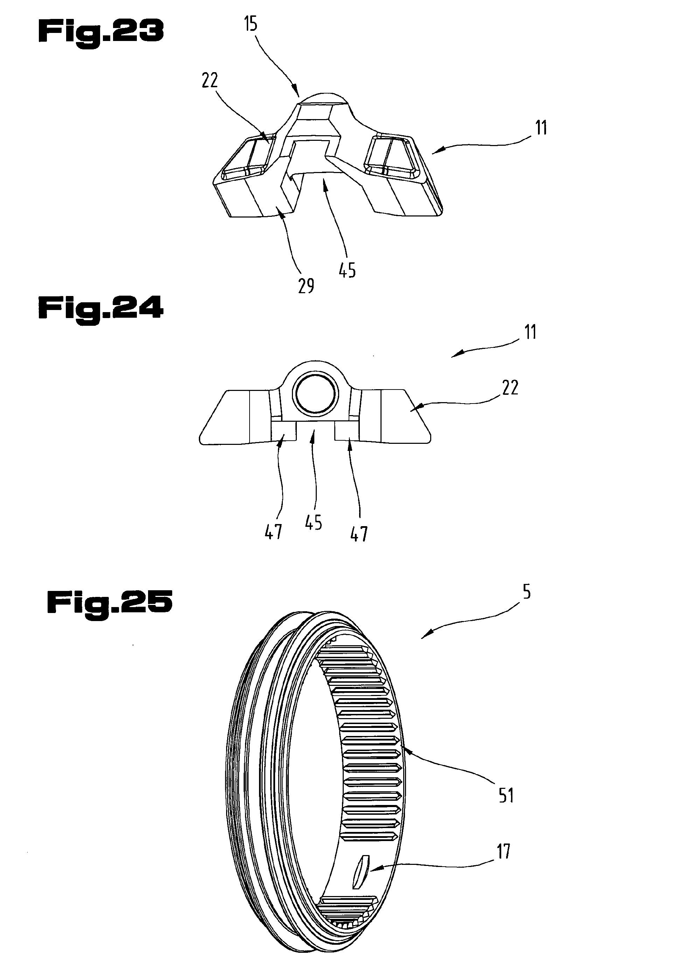

Fig. 25 zeigt schließlich die Schiebemuffe 5 alleine. Wie deutlich zu sehen ist, ist zwischen den Abschnitten, in denen eine Schiebemuffenverzahnung 51 ausgebildet ist, die Schiebemuffennut 17 für den Eingriff der Mittenerhöhung 15 des Kraftverstärkungselementes 11 angeordnet. Diese erstreckt sich also nur über einen Teilbereich der inneren Oberfläche der Schiebmuffe 5. Es ist pro Kraftverstärkungselement jeweils eine Schiebemuffennut 17 ausgebildet. Theoretisch kann sich diese Schiebemuffennut 17 über den gesamten inneren Umfang der Schiebemuffe 5 erstrecken, allerdings hätte dies den Nachteil, dass damit die Schiebemuffenverzahnung 51 unterbrochen wird.

Durch die Schiebemuffennut 17 wird einerseits eine Ausrichtung des Kraftverstärkungselementes 11 erreicht. Andererseits wird damit die Verschiebung der Schiebemuffe 5 gesperrt solange am Kraftverstärkungselement 11 ein Drehmoment anliegt. Wenn dieses Drehmoment auf Null abgesunken ist, kann das Kraftverstärkungselement 11 nach unten in Richtung auf die Synchronnabe 2 gedrückt werden, sodass die Schiebemuffe entsperrt ist. Mit der Abwärtsbewegung des Kraftverstärkungselementes 11 gleiten dessen Funktionsflächen 27 auf den Funktionsflächen des Synchronringes 10, d. h. den Wandflächen 37 ab, wodurch der Synchronring 10 verdreht wird. Da die Sperrung über das Kraftverstärkungselement 11 erfolgt, ist somit am Synchronring 10 keine Sperrverzahnung erforderlich. Die Rückstellung erfolgt, wenn das erzeugte Reibmoment wieder kleiner wird.

Durch die Ausbildung der schrägen Funktionsflächen 40 auf dem Steg unterhalb der Muffenverzahnung 4 der Synchronnabe 2 kann das Kraftverstärkungselement 11 tiefer in die Synchronnabe 2 eingebaut werden, wodurch die Bauhöhe der Getriebe-Synchronisationsvorrichtung verringert werden kann.

Insbesondere das Kraftverstärkungselement 11 und/oder der Synchronring 10 werden bevorzugt aus einem Sinterwerkstoff hergestellt, wobei auch andere Bestandteile der Getriebe-Synchronisationsvorrichtung 1 oder diese zur Gänze aus einem Sinterwerkstoff bestehen können.

Neben den voranstehend beschriebenen und in den Fig. gezeigten, insbesondere symmetrischen, Ausführungsvarianten des Kraftverstärkungselementes 11 besteht auch die Möglichkeit, dieses mit nur einer Funktionsfläche 27 und/oder nur einer Funktionsfläche 34 und/oder nur einer Funktionsfläche 36 auszubilden, wenn die Kraftverstärkung lediglich in einer Richtung notwendig bzw. erwünscht ist. Die voranstehenden Ausführungen können entsprechend übertragen werden. In diesem Fall kann z.B. auch die Synchronnabe 2 nur eine der Funktionsflächen 40 pro Ausnehmung 18 aufweisen. Anstelle der zweiten spitzwinkelig angeordneten Funktionsfläche 27 kann beispielsweise eine zur Längserstreckung 24 des Grundkörpers 22 rechtwinkelig angeordnete (in Draufsicht betrachtet) Fläche ausgebildet sein.

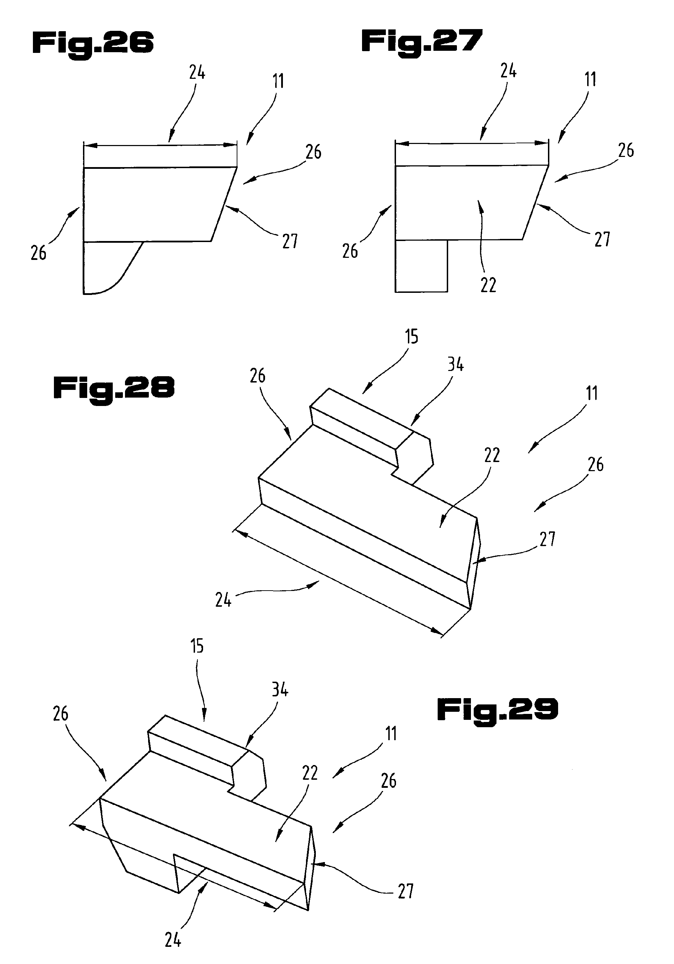

Verschiedene, nicht einschränkend zu verstehende Varianten derartiger Ausführungen von Kraftverstärkungselementen 11 sind in den Fig. 26 bis 29 dargestellt. Diese Varianten stellen zugleich die grundsätzlichen Prinzipien der Erfindung besser dar. Zum einen ist die Keilfunktion zur Ausbildung der Servosynchronisationsschräge, also der Funktionsfläche 27 im distalen Endbereich 26, für die Rückschaltfunktion, wobei angemerkt sei, dass wie bei den anderen Ausführungsvarianten des Kraftverstärkungselementes 11 auch eine zweite Schräge, also eine zweite Funktionsfläche 27 im zweiten distalen Endbereich für die Hochschaltfunktion ausgebildet werden kann.

Die Funktionsfläche 27 ist wie bei den anderen Varianten auf die Losradrichtung hin orientiert.

Auch diese Kraftverstärkungselemente 11 erstrecken sich bis in etwa maximal die Hälfte der Synchronnabe 2 in diese (nicht dargestellt), wobei die voranstehenden Ausführungen dazu auch hier anwendbar sind. Hinsichtlich der geometrischen Abmessungen in Draufsicht betrachtet, nimmt bei diesen Varianten die Mittenerhöhung 15 mit der Funktionsfläche 34 für den Eingriff in die Schiebemuffennut 17 der Schiebemuffe 5 (Fig. 25) zwischen ca. 40 % und 50 % der Längserstreckung 24 ein, der Rest wird durch den schrägen distalen Endbereich 26 gebildet.

Wie bereits voranstehend ausgeführt, kann der zweite distale Endbereich 26 gerade, also rechtwinkelig zur Längserstreckung 24, ausgebildet sein, wobei auch andere Formen, z. B. mit einer Rundung oder einer geringfügigen Schräge oder mit abgeschrägten bzw. gebrochenen Kanten, etc., möglich sind.

Es ist ebenfalls gezeigt, dass sich die Mittenerhöhung 15 des Kraftverstärkungselementes 11 nicht zwangsweise über zumindest annähernd die Breite des Kraftverstärkungselementes in axialer Richtung der Getriebe-Synchronisationsvorrichtung 1 (Fig. 1) erstrecken muss, sondern z. B. nur im vorderen Bereich, der bei den voranstehenden Ausführungen mit der Rundung versehen ist, angeordnet ist, und danach mit einer Abstufung in den Rest den Grundkörpers 22 des Kraftverstärkungselementes 11 übergeht, wenngleich auch hier Rundungen möglich sind, wie dies aus Fig. 26 ersichtlich ist.

Weiters kann im Bereich der Mittenerhöhung 15 auch an der Unterseite des Grundkörpers 22 und der Mittenerhöhung 15 gegenüberliegend ein Vorsprung ausgebildet sein, wie die aus Fig. 29 ersichtlich ist, z. B. um eine bessere Einbindung des Kraftverstärkungselementes 11 in den Synchronring 10 oder die Synchronnabe 2 (beide nicht dargestellt) zu ermöglichen, wobei im zweiten distalen Endbereich dieser Vorsprung mit einer Schräge versehen sein kann (in Fig. 29 gezeigt), der in Richtung der Längserstreckung 24 geneigt ist, sodass auch dieser Endbereich 26 zumindest annähernd keilförmig ausgebildet ist, allerdings mit zur Funktionsfläche 27 anderer Orientierung.

Das Kraftverstärkungselement 11 dieser Varianten kann zumindest annähernd die halbe Längserstreckung 24 aufweisen als das Kraftverstärkungselement 11 der voranstehenden Ausführungen mit jeweils einer Funktionsfläche 27 pro Endbereich 26.

Bei sämtlichen Ausführungsvarianten der Erfindung weist das Kraftverstärkungselement 11 keine negativ eingeformte Servofunktionsschrägen (Funktionsflächen 27) aus, wie dies beim Stand der Technik der Falls ist, wie z. B. in der EP 1 900 956 A, sondern zeigen diese positiv nach außen. Zudem ist die bzw. sind die Funktionsflächen 34 der Mittenerhöhung 15 bevorzugt abgewinkelt zu den Funktionsflächen 27 in den distalen Endbereichen 26 angeordnet. Insbesondere ist ein Absolutwert des Winkels zwischen diesen Funktionsflächen - in Draufsicht betrachtet - ausgewählt aus einem Bereich mit einer unteren Grenze von 3 ° und einer oberen Grenze von 89 °.

Es ist weiter bei sämtlichen Ausführungsvarianten möglich, dass das Kraftverstärkungselement 11 eine geringfügige Oberflächenkrümmung aufweist, deren Radius insbesondere zumindest annähernd dem Radius der Krümmung des Synchronringes 10 entsprechen kann, um eine bessere Einbindung zu erreichen.

Die Ausführungsbeispiele zeigen mögliche Ausführungsvarianten des Kraftverstärkungselementes 11, wobei an dieser Stelle angemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Ordnung halber sei abschließend darauf hingewiesen, dass zum besseren Verständnis des Aufbaus Kraftverstärkungselementes 11 dieses bzw. dessen Bestandteile teilweise unmaßstäblich und/oder vergrößert und/oder verkleinert dargestellt wurden.

**Bezugszeichenaufstellung**

| | | | |
|---|---|---|---|
| 1 | Getriebe-Synchronisationsvorrichtung | 39 | Stirnfläche |
| | | 40 | Funktionsfläche |
| 2 | Synchronnabe | 41 | Kupplungskörper |
| 3 | Steckverzahnung | 42 | Ausnehmung |
| 4 | Muffenverzahnung | 43 | Mitnehmerelement |
| 5 | Schiebemuffe | | |
| | | 44 | Mitnehmerelement |
| 6 | Reibpaket | 45 | Ausnehmung |
| 7 | Konusring | 46 | Mitnehmerelement |
| 8 | Konusring | 47 | Seitenwand |
| 9 | Mitnehmerelement | 48 | Seitenfläche |
| 10 | Synchronring | | |
| | | 49 | Funktionsfläche |
| 11 | Kraflverstärkungselement | 50 | Funktionsfläche |
| 12 | Federelement | 51 | Schiebemuffenverzahnung |
| 13 | Ausnehmung | | |
| 14 | Ausnehmung | | |
| 15 | Mittenerhöhung | | |
| | | | |
| 16 | Unterseite | | |
| 17 | Schiebemuffennut | | |
| 18 | Ausnehmung | | |
| 19 | Ausnehmung | | |
| 20 | Synchronringkörper | | |
| | | | |
| 201 | Ringsteg | | |
| 202 | Ringsteg | | |
| 21 | Umfang | | |
| 22 | Grundkörper | | |
| 23 | Höhe | | |
| | | | |
| 24 | Längserstreckung | | |
| 25 | Breitenerstreckung | | |
| 26 | Endbereich | | |
| 27 | Funktionsfläche | | |
| 28 | Winkel | | |
| | | | |
| 29 | Freistellung | | |
| 30 | Anlagefläche | | |
| 31 | Anlagefläche | | |
| 32 | Vorsprung | | |
| 33 | Rampe | | |
| | | | |
| 34 | Funktionsfläche | | |
| 35 | Winkel | | |
| 36 | Funktionsfläche | | |
| 37 | Wandfläche | | |
| 48 | Winkel | | |

## Patentansprüche

1. Getriebe-Synchronisationsvorrichtung (1) mit zumindest einer auf einer Welle anordenbaren Synchronnabe (2), die eine innere Steckverzahnung (3) zur drehfesten Verbindung mit der Welle und eine äußere Muffenverzahnung (4) aufweist, an der in axialer Richtung gegenüberliegend zumindest ein Synchronring (10) angeordnet ist, zumindest einem, auf der Welle anordenbaren Gangzahnrad, zumindest einem Reibpaket (6), das unterhalb des Synchronringes (10) und mit diesem in Wirkverbindung stehend angeordnet ist, sowie mit zumindest einer, über der Synchronnabe (2) angeordneten Schiebemuffe (5), wobei zwischen dem Gangzahnrad und dem Synchronring (10) ein Kupplungskörper (41) angeordnet ist und wobei die Synchronnabe (2) zumindest eine Ausnehmungen (18) aufweist, in der zumindest ein federbelastetes Kraftverstärkungselement (11) angeordnet ist, das einen Grundkörper (22), der eine Höhe (23) und - in Draufsicht betrachtet - eine Längserstreckung (24) und eine Breitenerstreckung (25) aufweist, wobei die Längserstreckung (24) in Umfangsrichtung der Synchronnabe (2) und die Breitenerstreckung (25) in Richtung der Breite der Synchronnabe (2) in axialer Richtung ausgebildet bzw. angeordnet sind, und der in Richtung der Längserstreckung (24) zwei einander gegenüberliegende, distale Endbereiche (26) aufweist, wobei in zumindest einem Endbereich (26), bevorzugt in beiden, eine Funktionsfläche (27) ausgebildet ist, die mit der Synchronnabe(2) zusammenwirkt(en), und die im bzw. in den distalen Endbereich(en) (26) in einem spitzen Winkel (28) zur größten Längserstreckung (24) des Grundkörpers (22) und gegen die Längserstreckung (24) geneigt orientiert ist bzw. sind, vorzugsweise in entgegengesetzter Richtung, insbesondere gegengleich, wobei am Grundkörper (22) zwischen den beiden distalen Endbereichen (26) eine Mittenerhöhung (15) für den Eingriff in eine Schiebemuffennut (17) an einer Unterseite (16) der Schiebemuffe (5) ausgebildet ist, wobei die Mittenerhöhung (15) zumindest eine weitere Funktionsfläche (34) aufweist, die mit der Schiebemuffe (5) in Wirkverbindung bringbar ist, **dadurch gekennzeichnet, dass** die zumindest eine weitere Funktionsfläche (34) der Mittenerhöhung (15) in Richtung der Breitenerstreckung (25) geneigt ist und die Schiebemuffennut (17) dazu komplementär geneigte Anlageflächen aufweist an denen die zumindest eine weitere Funktionsfläche (34) anliegt, dass weiters die Synchronnabe (2) unterhalb der Muffenverzahnung (4) und oberhalb der Steckverzahnung (3) in der Ausnehmung (18) zu den Funktionsflächen (25) zumindest annähernd mit einem Supplementwinkel zum spitzen Winkel (28) der distalen Endbereiche (26) des Kraftverstärkungselementes (11) verlaufende schräge Funktionsflächen (40) aufweist, wozu die Synchronnabe (2) einen sich in Umfangsrichtung erstreckenden ringförmigen Steg aufweist, an dem diese Funktionsflächen (40) ausgebildet sind und wobei ein Abstand in Umfangsrichtung zwischen den beiden Funktionsflächen (40) so bemessen ist, dass das Kraftverstärkungselement (11) mit einem Spiel zwischen den Funktionsflächen (27) der distalen Endbereiche (26) und den Funktionsflächen (40) in der Ausnehmung (18) angeordnet ist, also dessen Axialverschiebung in der Ausnehmung (18) möglich ist oder in Neutralstellung an diesen Funktionsflächen (40) anliegt und während der Synchronisation durch die Axialverschiebung an diesen abgleitet.

2. Getriebe-Synchronisationsvorrichtung (1) nach Anspruch 1, **dadurch gekennzeichnet, dass** der spitze Winkel (28) der Funktionsflächen (27) des Kraftverstärkungselementes (11) zur größten Längserstreckung (24) einen Absolutwert aufweist, der ausgewählt aus einem Bereich mit einer unteren Grenze von 3 ° und einer oberen Grenze von 89 °.

3. Getriebe-Synchronisationsvorrichtung (1) nach Anspruch 1 oder 2, **dadurch gekennzeichnet, dass** die Funktionsfläche(n) (27, 34) des Kraftverstärkungselementes (11) eine Größe aufweist bzw. aufweisen, ausgewählt aus einem Bereich mit einer unteren Grenze von 5 mm² und einer oberen Grenze von 60 mm².

4. Getriebe-Synchronisationsvorrichtung (1) nach einem der vorhergehenden Ansprüche, **dadurch gekennzeichnet, dass** ein Querschnitt des Grundkörpers (22) des Kraftverstärkungselementes (11) in Richtung der Höhe (23) zumindest annähernd u-förmig ausgebildet ist.

5. Getriebe-Synchronisationsvorrichtung (1) nach einem der vorhergehenden Ansprüche, **dadurch gekennzeichnet, dass** zumindest eine der Kanten der Funktionsfläche(n) (27) des Kraftverstärkungselementes (11) in dem bzw. den distalen Endbereich(en) (26) in Richtung der Höhe (23) gebrochen ist bzw. sind.

6. Getriebe-Synchronisationsvorrichtung (1) nach einem der Ansprüche 1 bis 4, **dadurch gekennzeichnet, dass** die Mittenerhöhung (15) des Kraftverstärkungselementes (11) in Richtung der Längserstreckung (24) betrachtet einen zumindest annähernd trapezförmigen Querschnitt aufweist, mit zwei gegengleich geneigten weiteren Funktionsflächen (34).

7. Getriebe-Synchronisationsvorrichtung (1) nach einem der Ansprüche 1 bis 5, **dadurch gekennzeichnet, dass** Kanten des bzw. der spitzen Winkel(s) (28) der Funktionsfläche(n) (27) des Kraftverstärkungselementes (11) unter Ausbildung zusätzlicher Funktionsflächen (36) zumindest teilweise gebrochen ist bzw. sind.

8. Getriebe-Synchronisationsvorrichtung (1) nach Anspruch 6, **dadurch gekennzeichnet, dass** die zusätzüche(n) Funktionsfläche(n) (36) des Kraftverstärkungselementes (11) gegen eine durch die Längserstreckung (24) und die Breitenerstreckung (25) definierte Querschnittsebene derart geneigt ausgebildet sind, dass die Länge des Grundkörpers (22) in Richtung auf die Mittenerhöhung (15) größer wird.

9. Getriebe-Synchronisationsvorrichtung (1) nach einem der Ansprüche 1 bis 7, **dadurch gekennzeichnet, dass** zwischen zumindest einem der distalen Endbereiche (22) und der Mittenerhöhung (15) des Kraftverstärkungselementes (11) auf der Oberseite des Grundkörpers (22) eine höckerartige Erhebung angeordnet ist.

10. Getriebe-Synchronisationsvorrichtung (1) nach einem der Ansprüche 1 bis 8, **dadurch gekennzeichnet, dass** im Grundkörper (22) des Kraftverstärkungselementes (11) eine Ausnehmung (45) für den Eingriff eines Synchronringes (10) angeordnet ist.

11. Getriebe-Synchronisationsvorrichtung (1) nach Anspruch 9, **dadurch gekennzeichnet, dass** eine die Ausnehmung (45) begrenzende Seitenwand (47) des Grundkörpers (22) zumindest teilweise abgeschrägt ist.

12. Getriebe-Synchronisationsvorrichtung (1) nach einem der Ansprüche 1 bis 10, **dadurch gekennzeichnet, dass** der Synchronring (10) zumindest eine Ausnehmung (19) aufweist, in die das zumindest eine aftverstärkungselement (11) eingreift.

13. Getriebe-Synchronisationsvorrichtung (1) nach Anspruch 10 oder 11, **dadurch gekennzeichnet, dass** der Synchronring (10) zumindest ein in axialer Richtung vorragendes Mitnehmerelement (46) aufweist, der in die Ausnehmung (45) des Kraftverstärkungselementes (11) eingreift.

14. Getriebe-Synchronisationsvorrichtung (1) nach Anspruch 13, **dadurch gekennzeichnet, dass** das Mitnehmerelement (46) des Synchronringes (10) mit zumindest einer schrägen Seitenfläche (48) versehen ist, die eine zur abgeschrägten, die Ausnehmung (45) im Grundkörper (22) des Kraftverstärkungselementes (11) begrenzenden Wandung komplementäre Neigung aufweist.

15. Getriebe-Synchronisationsvorrichtung (1) nach einem der Ansprüche 1 bis 14, **dadurch gekennzeichnet, dass** der Synchronring (10) einen sperrverzahnungsfreies Synchronringkörper (20) aufweist, der zumindest eine Ausnehmung (19) für die teilweise Aufnahme eines Kraftverstärkungselementes (11) aufweist, und dass ein innerer Umfang (21) nur durch die zumindest eine Ausnehmung (19) unterbrochen ist, wobei seitliche Wandungen der Ausnehmung (19) zumindest teilweise abgeschrägte Funktionsflächen für die Anlage an das Kraftverstärkungselement (11) aufweisen, oder dass der sperrverzahnungsfreie Synchronringkörper (20) zumindest ein in axialer Richtung über diesen vorspringendes Mitnehmerelement (46) aufweist und frei von radial nach unten weisenden Vorsprüngen ist, wobei seitliche Wandungen des zumindest einen Mitnehmerelementes (46) zumindest teilweise abgeschrägte Funktionsflächen für die Anlage an das Kraftverstärkungselement (11) aufweisen.

16. Getriebe-Synchronisationsvorrichtung (1) nach einem der Ansprüche 1 bis 15, **dadurch gekennzeichnet, dass** diese als Zweifachkonusausführung oder als Einfachkonusausführung ausgebildet ist.

## Claims

1. Transmission synchronization device (1) with at least one synchronizer hub (2) arrangeable on a shaft, which have an internal connector toothing (3) for the non-rotatable connection of the synchronizer hub (2) to the shaft, and an outer sleeve toothing (4), on which hub at least one synchronizer ring (10) is arranged opposite in axial direction, at least one gear wheel arrangeable on the shaft, at least one friction packet (6), which is arranged underneath the synchronizer ring (10) and is in operating connection with the latter, and with at least one sliding sleeve (5) which is arranged above the synchronizer hub (2), and between the gear wheel and the synchronizer ring (10) a coupling body (41) being arranged, and the synchronizer hub (2) comprising at least one recess (13), in which at least one spring-loaded power assist element (11) is arranged, which power assist element comprises a base body (22) having a height (23) and- as viewed in plan view - a longitudinal extension (24) and a lateral extension (25), the longitudinal extension (24) being formed or arranged in circumferential direction of the synchronizer hub (2), and the lateral extension (25) being formed or arranged in the direction of the width of the synchronizer hub (2) in axial direction, and which base body (22) having in the direction of the longitudinal extension (24) two opposite, distal end sections (26), and in at least one end section (26), preferably in both, a functional surface (27) is formed, which cooperate(s) with the synchronizer hub (2), and which functional surface(s) (27) in the distal end section(s) (26) is/are oriented to be inclined at an acute angle (28) to the greatest longitudinal extension (24) of the base body (22) and against the longitudinal extension (24), preferably opposite one another, in particular in mirror image, and on the base body (22) between the two distal end sections (26) a central elevation (15) is formed for engagement in a sliding sleeve groove (17) on the underside (16) of a sliding sleeve (5), and the central elevation (15) has at least one additional functional surface (34), which can be brought into operating connection with the sliding sleeve (5), **characterized in that** the at least one additional functional surface (34) of the central elevation (15) is inclined in the direction of the lateral extension (25), and the sliding sleeve groove (17) has bearing surfaces complementarily inclined thereto, against which bearing surfaces the at least one additional function surface bears, that furthermore, the synchronizer hub (2) comprises below the sleeve toothing (4) and above the connector toothing (3) in the recess (18) obliquely functional surfaces (40) running to the functional surfaces (25) at least approximately with a supplementary angle to the acute angle (28) of the distal end sections (26) of the power assist element (11), for which purpose the synchronizer hub (2) has an annular web extending in circumferential direction, on which said functional surfaces (40) are formed, and a distance in circumferential direction between the two functional surfaces (40) is dimensioned so that the power assist element (11) can be arranged with a clearance between the functional surfaces (27) of the distal end sections (26) and the functional surfaces (40) in the recess (18), i.e. its axial displacement is possible in the recess (18), or the power assist element (11) in a neutral position bears against said functional surfaces (40) and during the synchronization slides on the latter due to the axial displacement.

2. Transmission synchronization device (1) according to claim 1, **characterized in that** the acute angle (28) of the functional surfaces (27) of the power assist element (11) to the greatest longitudinal extension (24) has an absolute value, which is selected from a range having a lower limit of 3° and an upper limit of 89°.

3. Transmission synchronization device (1) according to claim 1 or 2, **characterized in that** the functional surface(s) (27, 34) of the power assist element (11) has or have a dimension which is selected from a range having a lower limit of 5 mm² and an upper limit of 60 mm².

4. Transmission synchronization device (1) according to one of the preceding claims, **characterized in that** the base body (22) of the power assist element (11) is designed to have an at least approximately U-shaped cross section in the direction of the height (23).

5. Transmission synchronization device (1) according to one of the preceding claims, **characterized in that** at least one of the edges of the functional surface(s) (27) of the power assist element (11) in the distal end section(s) (26) has or have removed sharp edges in the direction of the height (23).

6. Transmission synchronization device (1) according to one of claims 1 to 4, **characterized in that** the central elevation (15) of the power assist element (11), as viewed in the direction of the longitudinal extension(24), has an at least approximately trapezoidal cross section, with two mirror-image inclined additional functional surfaces (34).

7. Transmission synchronization device (1) according to one of claims 1 to 5, **characterized in that** edges of the acute angle(s) (28) of the functional surface(s) (27) of the power assist element (11) is or are designed to have removed sharp edges at least partly by forming additional functional surfaces (36).

8. Transmission synchronization device (1) according to claim 6, **characterized in that** the additional functional surface(s) (36) of the power assist element (11) are designed to be inclined relative to a cross sectional plane defined by the longitudinal extension (24) and the lateral extension (25) in such a way that the length of the base body (22) becoming greater in the direction of the central elevation (15).

9. Transmission synchronization device (1) according to one of claims 1 to 7, **characterized in that** a knob-like elevation is arranged between at least one of the distal end sections (26) and the central elevation (15) of the power assist element (11) on the upper side of the base body (22).

10. Transmission synchronization device (1) according to one of claims 1 to 8, **characterized in that** a recess (45) for the engagement of a synchronizer ring (10) is arranged in the base body (22) of the power assist element (11).

11. Transmission synchronization device (1) according to claim 9, **characterized in that** a side wall (47) of the base body (22) delimiting the recess (45) is at least partly beveled.

12. Transmission synchronization device (1) according to one of claims 1 to 10, **characterized in that** the synchronizer ring (10) has at least one recess (19) in which the at least one power assist element (11) engages.

13. Transmission synchronization device (1) according to claim 10 or 11, **characterized in that** the synchronizer ring (10) comprises at least one driver element (46) projecting in axial direction, which engages in the recess (45) of the power assist element (11).

14. Transmission synchronization device (1) according to claim 13, **characterized in that** the driver element (46) of the synchronizer ring (10) is provided with at least one oblique side surface (48), which has an inclination complementary to the beveled wall delimiting the recess (45) in the base body (22) of the power assist element (11).

15. Transmission synchronization device (1) according to one of claims 1 to 14, **characterized in that** the synchronizer ring (10) comprises a locking tooth-free synchronizer ring body (20), which comprises at least one recess (19) for the partial mounting of a power assist element (11), and that an inner circumference (21) is only interrupted by the at least one recess (19), side walls of the recess having at least partly beveled functional surfaces for bearing the power assist element (11), or that the locking tooth-free synchronizer ring body (20) comprises at least one driver element (46) projecting over the latter in axial direction and is free of radially downwards pointing projections, side walls of the recess (19) or the at least one driver element (46) having at least partly beveled functional surfaces for bearing on the power assist element (11).

16. Transmission synchronization device (1) according to one of claims 1 to 15, **characterized in that** it is embodied to have a double cone design or a single cone design.

## Revendications

1. Synchroniseur de boîte de vitesses (1) comportant au moins un moyeu de synchronisation (2) à monter sur un arbre et muni d'une denture à emmancher (3) intérieure pour l'assemblage solidaire en rotation avec l'arbre et une denture à emboîtement (4) extérieure, sur laquelle est disposé au moins un anneau de synchronisation (10) opposé dans le sens axial, au moins un pignon d'engrenage à monter sur l'arbre, au moins un paquet de friction (6) qui est disposé verticalement en dessous de l'anneau de synchronisation (10) et est en liaison fonctionnelle avec celui-ci, et comportant au moins un manchon coulissant (5) disposé au-dessus du moyeu de synchronisation (2), un corps de couplage (41) étant disposé entre le pignon d'engrenage et l'anneau de synchronisation (10), et le moyeu de synchronisation (2) comportant au moins un évidement (18) dans lequel est disposé au moins un élément amplificateur de force (11) sollicité par ressort, lequel comporte un corps de base (22) qui présente une hauteur (23) et - sur une vue en élévation - une dimension longitudinale (24) et une dimension en largeur (25), ladite dimension longitudinale (24) et ladite dimension en largeur (25) étant réalisées et disposées dans le sens axial, respectivement dans le sens de la circonférence du moyeu de synchronisation (2) et dans le sens de la largeur du moyeu de synchronisation (2), et lequel comporte, dans le sens de la dimension longitudinale (24), deux zones d'extrémité distales (26) opposées l'une à l'autre, une surface fonctionnelle (27) étant réalisée dans au moins une zone d'extrémité (26), de préférence dans les deux, laquelle/lesquelles coopère/coopèrent avec le moyeu de synchronisation (2) et laquelle/lesquelles, dans la ou dans les zone(s) d'extrémité distales (26), est ou sont orientée(s) en formant un angle aigu (28) avec la plus grande dimension longitudinale (24) du corps de base (22) et en étant inclinée(s) à l'encontre de la dimension longitudinale (24), de préférence dans une direction opposée, en particulier de manière diamétralement opposée, une surélévation médiane (15) destinée à s'engager dans une rainure (17) sur la face inférieure (16) du manchon coulissant (5) étant réalisée sur le corps de base (22) entre les deux zones d'extrémité distales (26), ladite surélévation médiane (15) comportant au moins une surface fonctionnelle (34) supplémentaire qui peut être amenée en liaison fonctionnelle avec le manchon coulissant (5), **caractérisé en ce que** ladite au moins une surface fonctionnelle (34) supplémentaire de la surélévation médiane (15) est inclinée dans la direction de la dimension en largeur (25), et la rainure (17) du manchon coulissant comporte des surfaces d'appui, qui sont inclinées de manière complémentaire à celle-ci et contre lesquelles vient en appui ladite au moins une surface fonctionnelle (34) supplémentaire, **en ce que**, en outre, le moyeu de synchronisation (2) comporte, au-dessous de la denture à emboîtement (4) et au-dessus de la denture à emmancher (3), dans l'évidement (18), des surfaces fonctionnelles (40) inclinées par rapport aux surfaces fonctionnelles (25) au moins approximativement avec un angle supplémentaire à l'angle aigu (28) des zones d'extrémité distales (26) de l'élément amplificateur de force (11), à cet effet le moyeu de synchronisation (2) comporte une nervure annulaire, qui s'étend dans le sens circonférentiel et sur laquelle sont réalisées lesdites surfaces fonctionnelles (40), et une distance dans le sens circonférentiel entre les deux surfaces fonctionnelles (40) étant choisie de telle sorte que l'élément amplificateur de force (11) est agencé avec un jeu entre les surfaces fonctionnelles (27) des zones d'extrémité distales (26) et les surfaces fonctionnelles (40) dans l'évidement (18), c'est-à-dire que le coulissement axial de celui-ci dans l'évidement (18) est possible ou vient en appui, dans la position neutre, contre lesdites surfaces fonctionnelles (40) et pendant la synchronisation glisse sur celles-ci sous l'effet du coulissement axial.

2. Synchroniseur de boîte de vitesses (1) selon la revendication 1, **caractérisé en ce que** l'angle aigu (28) formé entre les surfaces fonctionnelles (27) de l'élément amplificateur de force (11) et la plus grande dimension longitudinale (24) a une valeur absolue qui est choisie dans une plage avec une limite inférieure de 3° et une limite supérieure de 89°.

3. Synchroniseur de boîte de vitesses (1) selon la revendication 1 ou 2, **caractérisé en ce que** la/les surface(s) fonctionnelle(s) (27, 34) de l'élément amplificateur de force (11) a ou ont une dimension choisie dans une plage avec une limite inférieure de 5 mm² et une limite supérieure de 60 mm².

4. Synchroniseur de boîte de vitesses (1) selon l'une quelconque des revendications précédentes, **caractérisé en ce qu'**une section transversale du corps de base (22) de l'élément amplificateur de force (11) est réalisée au moins approximativement en forme de U dans le sens de la hauteur (23).

5. Synchroniseur de boîte de vitesses (1) selon l'une quelconque des revendications précédentes, **caractérisé en ce qu'**au moins un des bords de la ou des surface(s) fonctionnelle(s) (27) de l'élément amplificateur de force (11) dans la/les zone(s) d'extrémité distale(s) (26) est ou sont brisé(s) dans le sens de la hauteur (23).

6. Synchroniseur de boîte de vitesses (1) selon l'une quelconque des revendications 1 à 4, **caractérisé en ce que** la surélévation médiane (15) de l'élément amplificateur de force (11), considérée dans le sens de la dimension longitudinale (24), comporte une section transversale au moins approximativement en forme de trapèze, avec deux surfaces fonctionnelles (34) supplémentaires inclinées de manière diamétralement opposée.

7. Synchroniseur de boîte de vitesses (1) selon l'une quelconque des revendications 1 à 5, **caractérisé en ce que** les bords de l'angle aigu ou des angle(s) aigu(s) (28) des surface(s) fonctionnelle(s) (27) de l'élément amplificateur de force (11) est/sont brisés au moins partiellement en formant des surfaces fonctionnelles (36) supplémentaires.

8. Synchroniseur de boîte de vitesses (1) selon la revendication 6, **caractérisé en ce que** la/les surface(s) fonctionnelle(s) (36) supplémentaire(s) de l'élément amplificateur de force (11) sont inclinées dans le sens opposé à une section transversale définie par la dimension longitudinale (24) et la dimension en largeur (25), de telle sorte que la longueur du corps de base (22) est plus grande vers la surélévation médiane (15).

9. Synchroniseur de boîte de vitesses (1) selon l'une quelconque des revendications 1 à 7, **caractérisé en ce qu'**entre au moins une des zones d'extrémité distales (26) et la surélévation médiane (15) de l'élément amplificateur de force (11), une bosse en forme de protubérance est disposée sur la face supérieure du corps de base (22).

10. Synchroniseur de boîte de vitesses (1) selon l'une quelconque des revendications 1 à 8, **caractérisé en ce qu'**un évidement (45) pour l'engagement d'un anneau de synchronisation (10) est ménagé dans le corps de base (22) de l'élément amplificateur de force (11).

11. Synchroniseur de boîte de vitesses (1) selon la revendication 9, **caractérisé en ce qu'**une paroi latérale (47) du corps de base (22), délimitant l'évidement (45), est chanfreinée au moins en partie.

12. Synchroniseur de boîte de vitesses (1) selon l'une quelconque des revendications 1 à 10, **caractérisé en ce que** l'anneau de synchronisation (10) comporte au moins un évidement (19) dans lequel s'engage au moins un élément amplificateur de force (11).

13. Synchroniseur de boîte de vitesses (1) selon la revendication 10 ou 11, **caractérisé en ce que** l'anneau de synchronisation (10) comporte au moins un élément d'entraînement (46) saillant dans le sens axial, lequel s'engage dans l'évidement (45) de l'élément amplificateur de force (11).

14. Synchroniseur de boîte de vitesses (1) selon la revendication 13, **caractérisé en ce que** l'élément d'entraînement (46) de l'anneau de synchronisation (10) est muni d'au moins une face latérale (48) oblique, qui possède une inclinaison complémentaire à la paroi chanfreinée délimitant l'évidement (45) dans le corps de base (22) de l'élément amplificateur de force (11).

15. Synchroniseur de boîte de vitesses (1) selon l'une quelconque des revendications 1 à 14, **caractérisé en ce que** l'anneau de synchronisation (10) comporte un corps (20) sans denture de blocage, qui comporte au moins un évidement (19) pour recevoir partiellement un élément amplificateur de force (11), et **en ce qu'**un contour intérieur (21) est seulement interrompu par ledit au moins un évidement (19), des parois latérales de l'évidement (19) comportant des surfaces fonctionnelles chanfreinées au moins en partie pour prendre appui contre l'élément amplificateur de force (11), ou **en ce que** le corps (20) sans denture de blocage comporte au moins un élément d'entraînement (46) en saillie sur celui-ci dans le sens axial et ne comporte pas de saillies orientées radialement vers le bas, des parois latérales dudit au moins un élément d'entraînement (46) comportant des surfaces fonctionnelles chanfreinées au moins en partie pour prendre appui contre l'élément amplificateur de force (11).

16. Synchroniseur de boîte de vitesses (1) selon l'une quelconque des revendications 1 à 15, **caractérisé en ce que** ledit synchroniseur est réalisé selon un mode de réalisation à double cône ou selon un mode de réalisation à simple cône.
